(19) Europäisches Patentamt
European Patent Office
Office européen des brevets

(11) **EP 4 535 699 A1**

(12) **EUROPEAN PATENT APPLICATION**
published in accordance with Art. 153(4) EPC

(43) Date of publication:
09.04.2025 Bulletin 2025/15

(21) Application number: 23811038.1

(22) Date of filing: 23.05.2023

(51) International Patent Classification (IPC):
*H04L 1/18* (2023.01)

(52) Cooperative Patent Classification (CPC):
H04L 1/18; H04L 1/1812; H04L 5/00;
H04W 72/0453; H04W 72/20

(86) International application number:
PCT/CN2023/095724

(87) International publication number:
WO 2023/226967 (30.11.2023 Gazette 2023/48)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 27.05.2022 CN 202210594823
23.12.2022 CN 202211664494

(71) Applicant: Datang Mobile Communications
Equipment Co., Ltd.
Beijing 100085 (CN)

(72) Inventors:
• WANG, Junwei
  Beijing 100085 (CN)
• GAO, Xuejuan
  Beijing 100085 (CN)

(74) Representative: Maiwald GmbH
Engineering
Elisenhof
Elisenstrasse 3
80335 München (DE)

(54) **METHOD AND APPARATUS FOR DETERMINING DYNAMIC CODEBOOK, AND COMMUNICATION DEVICE**

(57) The present disclosure relates to the technical field of communications. Provided are a method and apparatus of determining a dynamic codebook, and a communication device. The method of determining a dynamic codebook is executed by a communication device, and comprises: determining the quantity of pieces of scheduling signaling corresponding to a HARQ-ACK feedback which is transmitted on a first PUCCH, wherein at least one piece of scheduling signaling is used for scheduling PDSCHs of at least two cells; determining the quantity of bits of the HARQ-ACK corresponding to each piece of scheduling signaling; and on the basis of the quantity of pieces of scheduling signaling and the quantity of bits of the HARQ-ACK corresponding to each piece of scheduling signaling, determining a dynamic codebook which is transmitted on the first PUCCH.

```
┌─────────────────────────────────────────────────────────────┐
│ Determining a quantity of scheduling signaling corresponding │──S501
│ to a hybrid automatic repeat request acknowledgement         │
│ (HARQ-ACK) feedback transmitted on a first physical uplink   │
│ control channel (PUCCH)                                       │
└─────────────────────────────────────────────────────────────┘
                          │
                          ▼
┌─────────────────────────────────────────────────────────────┐
│ Determining a quantity of bits of a HARQ-ACK corresponding   │──S502
│ to each scheduling signaling                                 │
└─────────────────────────────────────────────────────────────┘
                          │
                          ▼
┌─────────────────────────────────────────────────────────────┐
│ Determining the dynamic codebook transmitted on the first    │──S503
│ PUCCH based on the quantity of the scheduling signaling and  │
│ the quantity of bits of the HARQ-ACK corresponding to each   │
│ scheduling signaling                                         │
└─────────────────────────────────────────────────────────────┘
```

FIG.5

**Description**

**CROSS-REFERENCE TO RELATED APPLICATION**

This application claims a priority to Chinese Patent Application No. 202210594823.6 filed on May 27, 2022 and a priority to Chinese Patent Application No. 202211664494.4 filed on December 23, 2022, the disclosures of which are incorporated in their entirety by reference herein.

**TECHNICAL FIELD**

The present disclosure relates to the field of communications technologies, and in particular, to a method and apparatus of determining a dynamic codebook, and a communications device.

**BACKGROUND**

When a Downlink Control Information (DCI) is used for scheduling multiple Physical Downlink Shared Channels (PDSCHs) in a plurality of carriers, there is no explicit technical solution for generating a Hybrid Automatic Repeat Request Acknowledgement (HARQ-ACK) dynamic codebook.

**SUMMARY**

Embodiments of the present disclosure provide a method and an apparatus of determining a dynamic codebook, and a communication device, to solve the problem of how to generate a HARQ-ACK dynamic codebook when one DCI is used for scheduling multiple PDSCHs in multiple carriers.

In order to address the above technical problem, a method of determining a dynamic codebook performed by a communication device is provided, the method includes: determining a quantity of pieces of scheduling signaling corresponding to a hybrid automatic repeat request acknowledgement (HARQ-ACK) feedback transmitted on a first physical uplink control channel (PUCCH), wherein at least one piece of scheduling signaling in the pieces of scheduling signaling is configured to schedule physical downlink shared channels (PDSCH) of at least two cells; determining a quantity of bits of a HARQ-ACK corresponding to each piece of scheduling signaling; determining the dynamic codebook transmitted on the first PUCCH based on the quantity of the pieces of scheduling signaling and the quantity of bits of the HARQ-ACK corresponding to each piece of scheduling signaling.

Optionally, determining the quantity of pieces of scheduling signaling corresponding to the HARQ-ACK feedback transmitted on the first PUCCH includes: determining a target cell on which a transmitted counter downlink assignment index (C-DAI) counts, wherein the target cell is one of cells scheduled by the pieces of scheduling signaling, or a cell that transmits the pieces of scheduling signaling; determining a counting order of the C-DAI according to the target cell on which the C-DAI counts; determining the quantity of pieces of scheduling signaling corresponding to the HARQ-ACK feedback transmitted on the first PUCCH according to the counting order of the C-DAI.

Optionally, one of the cells scheduled by the piece of scheduling signaling includes one of the following: a cell with a smallest cell index on the cells scheduled by the piece of scheduling signaling; a cell with a largest cell index on the cells scheduled by the piece of scheduling signaling; a cell in which reception time of a scheduled PDSCH is the latest on the cells scheduled by the piece of scheduling signaling.

Optionally, determining the counting order of the C-DAI according to the target cell on which the C-DAI counts includes one or more of the following: in a case that the target cell is a cell that transmits the piece of scheduling signaling, there are two pieces of scheduling signaling in a same physical downlink control channel (PDCCH) transmission occasion, and in a case that at least one piece of scheduling signaling in the two pieces of scheduling signaling schedules PDSCHs of at least two cells, determining the counting order of the C-DAI according to time of scheduling the PDSCHs of multiple cells; determining the counting order of the C-DAI according to the index of the target cell on which the C-DAI counts; determining the counting order of the C-DAI according to a transmission occasion of the piece of scheduling signaling.

Optionally, determining the counting order of the C-DAI according to the time of scheduling the PDSCHs of the multiple cells includes: selecting, according to an order of scheduling the PDSCHs by the piece of scheduling signaling, N-th PDSCHs respectively scheduled by the two pieces of scheduling signaling; if target time of the Nth PDSCHs scheduled by the two pieces of scheduling signaling is different, arranging the C-DAI corresponding to the PDSCH with earlier target time at an earlier position; where N is an integer greater than or equal to 1, and the target time includes a start time or an end time.

Optionally, determining the counting order of the C-DAI according to the time of scheduling the PDSCHs of the multiple cells includes: selecting, according to an order of scheduling the PDSCHs by the piece of scheduling signaling, Nth PDSCHs respectively scheduled by the two pieces of scheduling signaling; if target time of the Nth PDSCHs scheduled by the two pieces of scheduling signaling is same, selecting (N+1)th PDSCHs respectively scheduled by the two pieces of scheduling signaling, and when the target time of the (N +1)th PDSCHs scheduled by the two pieces of scheduling signaling is different, arranging the C-DAI corresponding to the PDSCH with earlier target time at an earlier position; or if the target time of the Nth PDSCHs scheduled by the two pieces of scheduling signaling is same, determining a counting order of the C-DAIs corresponding to the two pieces of scheduling signaling according to the target cells on which the C-DAIs count; where N is an integer greater than or equal to 1, and the target time includes a start time or an end time.

Optionally, determining the quantity of bits of the HARQ-ACK corresponding to each piece of scheduling signaling includes: obtaining a maximum quantity of schedulable cells corresponding to one piece of scheduling signaling; determining the quantity of bits of the HARQ-ACK corresponding to the piece of scheduling signaling according to the maximum quantity of the schedulable cells and a quantity of bits of feedback on each schedulable cell.

Optionally, obtaining the maximum quantity of the schedulable cells corresponding to one piece of scheduling signaling includes: determining the maximum quantity, configured by higher layer signaling, of the schedulable cells corresponding to one piece of scheduling signaling; or determining the maximum quantity of the schedulable cells corresponding to one piece of scheduling signaling according to a configured first target time domain resource allocation TDRA table.

Optionally, determining the quantity of bits of the HARQ-ACK corresponding to the piece of scheduling signaling according to the maximum quantity of the schedulable cells and the quantity of bits of feedback on each schedulable cell includes: when determining the maximum quantity of the schedulable cells and the quantity of bits corresponding to each pre-configured cell, adding quantities of bits respectively corresponding to schedulable cells to obtain the quantity of bits of the HARQ-ACK corresponding to the piece of scheduling signaling.

Optionally, determining the quantity of bits of the HARQ-ACK corresponding to each piece of scheduling signaling includes: obtaining a second target TDRA table; determining a schedulable cell in each row in the second target TDRA table; determining the quantity of bits of the HARQ-ACK corresponding to one piece of scheduling signaling according to the quantity of schedulable cells in each row and the quantity of bits of feedback on each cell.

Optionally, determining the quantity of bits of the HARQ-ACK corresponding to one piece of scheduling signaling includes: determining the quantity of bits of the HARQ-ACK corresponding to each row according to the quantity of schedulable cells in each row and the quantity of bits of feedback on each cell; selecting, according to the quantity of bits of the HARQ-ACK corresponding to each row, a maximum quantity of bits of the HARQ-ACK as the quantity of bits of the HARQ-ACK corresponding to one piece of scheduling signaling.

A communications device is provided, where the communications device is a terminal device or a network device, the communication device includes a memory, a transceiver, and a processor, the memory is configured to store a computer program; the transceiver, configured to send and receive data under the control of the processor; and the processor is configured to read the computer program in the memory and perform the following operations: determining a quantity of pieces of scheduling signaling corresponding to a hybrid automatic repeat request acknowledgement (HARQ-ACK) feedback transmitted on a first physical uplink control channel (PUCCH), where at least one of the pieces of scheduling signaling is configured to schedule physical downlink shared channels (PDSCH) of at least two cells; determining a quantity of bits of a HARQ-ACK corresponding to each piece of scheduling signaling; determining the dynamic codebook transmitted on the first PUCCH based on the quantity of the pieces of scheduling signaling and the quantity of bits of the HARQ-ACK corresponding to each piece of scheduling signaling.

Optionally, the processor is configured to read the computer program in the memory and perform the following operations: determining a target cell on which a transmitted counter downlink assignment index (C-DAI) counts, where the target cell is one of cells scheduled by the piece of scheduling signaling, or a cell that transmits the piece of scheduling signaling; determining a counting order of the C-DAI according to the target cell on which the C-DAI counts; determining the quantity of pieces of scheduling signaling corresponding to the HARQ-ACK feedback transmitted on the first PUCCH according to the counting order of the C-DAI.

Optionally, one of the cells scheduled by the piece of scheduling signaling includes one of the following: a cell with a smallest cell index on the cells scheduled by the piece of scheduling signaling; a cell with a largest cell index on the cells scheduled by the piece of scheduling signaling; a cell in which reception time of a scheduled PDSCH is latest on the cells scheduled by the piece of scheduling signaling.

Optionally, the processor is configured to read the computer program in the memory and perform one or more of the following operations: in a case that the target cell is a cell that transmits the piece of scheduling signaling, there are two pieces of scheduling signaling in a same physical downlink control channel (PDCCH) transmission occasion, and in a case that at least one piece of scheduling signaling in the two pieces of scheduling signaling schedules PDSCHs of at least two cells, determining the counting order of the C-DAI according to time of scheduling the PDSCHs of multiple cells; determining the counting order of the C-DAI according to the index of the target cell on which the C-DAI counts; determining the counting order of the C-DAI according to a transmission occasion of the piece of scheduling signaling.

Optionally, the processor is configured to read a computer program in the memory and perform the following operations: selecting, according to an order of scheduling the PDSCHs by the piece of scheduling signaling, N-th PDSCHs respectively scheduled by the two pieces of scheduling signaling; if target time of the Nth PDSCHs scheduled by the two pieces of scheduling signaling is different, arranging the C-DAI corresponding to the PDSCH with earlier target time at an earlier position; where N is an integer greater than or equal to 1, and the target time includes a start time or an end time.

Optionally, the processor is configured to read the computer program in the memory to further perform the following operations: selecting, according to an order of scheduling the PDSCHs by the piece of scheduling signaling, Nth PDSCHs respectively scheduled by the two pieces of scheduling signaling; if target time of the Nth PDSCHs scheduled by the two pieces of scheduling signaling is same, selecting (N+1)th PDSCHs respectively scheduled by the two pieces of scheduling signaling, and when the target time of the (N +1)th PDSCHs scheduled by the two pieces of scheduling signaling is different, arranging the C-DAI corresponding to the PDSCH with earlier target time at an earlier position; or if the target time of the Nth PDSCHs scheduled by the two pieces of scheduling signaling is same, determining a counting order of the C-DAIs corresponding to the two pieces of scheduling signaling according to the target cells on which the C-DAIs count; where N is an integer greater than or equal to 1, and the target time includes a start time or an end time.

Optionally, the processor is configured to read the computer program in the memory and perform the following operations: obtaining a maximum quantity of schedulable cells corresponding to one piece of scheduling signaling; determining the quantity of bits of the HARQ-ACK corresponding to the piece of scheduling signaling according to the maximum quantity of the schedulable cells and a quantity of bits of feedback on each schedulable cell.

Optionally, the processor is configured to read the computer program in the memory and perform the following operations: determining the maximum quantity, configured by higher layer signaling, of the schedulable cells corresponding to one piece of scheduling signaling; or determining the maximum quantity of the schedulable cells corresponding to one piece of scheduling signaling according to a configured first target time domain resource allocation TDRA table.

Optionally, the processor is configured to read the computer program in the memory and perform the following operations: determining the quantity of bits of the HARQ-ACK corresponding to the piece of scheduling signaling according to the maximum quantity of the schedulable cells and a quantity of bits of feedback on each schedulable cell includes: when determining the maximum quantity of the schedulable cells and the quantity of bits corresponding to each pre-configured cell, adding quantities of bits respectively corresponding to schedulable cells to obtain the quantity of bits of the HARQ-ACK corresponding to the piece of scheduling signaling.

Optionally, the processor is configured to read the computer program in the memory and perform the following operations: obtaining a second target TDRA table; determining a schedulable cell in each row in the second target TDRA table; determining the quantity of bits of the HARQ-ACK corresponding to one piece of scheduling signaling according to the quantity of schedulable cells in each row and the quantity of bits of feedback on each cell.

Optionally, the processor is configured to read the computer program in the memory and perform the following operations: determining the quantity of bits of the HARQ-ACK corresponding to each row according to the quantity of schedulable cells in each row and the quantity of bits of feedback on each cell; selecting, according to the quantity of bits of the HARQ-ACK corresponding to each row, a maximum quantity of bits of the HARQ-ACK as the quantity of bits of the HARQ-ACK corresponding to one piece of scheduling signaling.

An apparatus of determining a dynamic codebook applied to a terminal device or a network device is provided. The apparatus includes: a first determining unit, configured to determine a quantity of pieces of scheduling signaling corresponding to a hybrid automatic repeat request acknowledgement (HARQ-ACK) feedback transmitted on a first physical uplink control channel (PUCCH), where at least one of the pieces of scheduling signaling is configured to schedule physical downlink shared channels (PDSCH) of at least two cells; a second determining unit, configured to determine a quantity of bits of a HARQ-ACK corresponding to each piece of scheduling signaling; a third determining unit, configured to determine the dynamic codebook transmitted on the first PUCCH based on the quantity of the pieces of scheduling signaling and the quantity of bits of the HARQ-ACK corresponding to each piece of scheduling signaling.

A processor-readable storage medium is provided. The processor-readable storage medium stores a computer program, and the computer program is configured to cause a processor to perform the method according to above.

The present disclosure further provides a computer program product, where the computer program product stores a computer program, and the computer program is configured to cause the processor to perform the foregoing method.

The present disclosure further provides a chip product, where the chip product stores a computer program, and the computer program is configured to cause the processor to perform the foregoing method.

The present disclosure further provides a communications device, where the communications device stores a computer program, and the computer program is configured to cause the processor to perform the foregoing method.

The beneficial effects of the present disclosure are:

According to the foregoing solution, in a case that there is at least one piece of scheduling signaling for scheduling PDSCHs of at least two cells, the dynamic codebook transmitted on the first PUCCH is determined based on the quantity of pieces of scheduling signaling corresponding to the HARQ-ACK feedback transmitted on the first PUCCH and the quantity of bits of the HARQ-ACK corresponding to each piece of scheduling signaling, so as to ensure that dynamic codebook transmission can also be accurately performed when there is at least one piece of scheduling signaling for scheduling PDSCHs of at least two cells.

## BRIEF DESCRIPTION OF THE DRAWINGS

In order to more clearly illustrate the technical solutions in the embodiments of the present disclosure or the related art, the drawings required in the description of the embodiments or the related art will be briefly described below, and obviously, the drawings in the following description are merely some embodiments disclosed in the present disclosure, and for those of ordinary skill in the art, other drawings may be obtained according to these drawings without creative efforts.

FIG. 1 shows a structural diagram of a network system applicable to an embodiment of the present disclosure;
FIG. 2 is a first schematic diagram of scheduling corresponding to a dynamic codebook in a single-carrier scenario;
FIG. 3 is a second schematic diagram of scheduling corresponding to a dynamic codebook in a single-carrier scenario;
FIG. 4 is a schematic diagram of a C-DAI counting sequence;
FIG. 5 is a schematic flowchart of a method of determining a dynamic codebook according to an embodiment of the present disclosure;
FIG. 6 is a schematic diagram of a DCI scheduling a PDSCH and a C-DAI in a first application case;
FIG. 7 shows a schematic diagram of a DCI scheduling a PDSCH and a C-DAI in a second application case;
FIG. 8 is a schematic diagram of units of an apparatus of determining a dynamic codebook according to an embodiment of the present disclosure;
FIG. 9 is a structural diagram of a communication device according to an embodiment of the present disclosure.

## DETAILED DESCRIPTION

The technical solutions in the embodiments of the present disclosure will be clearly and completely described below with reference to the accompanying drawings in the embodiments of the present disclosure. All other embodiments obtained by a person of ordinary skill in the art based on the embodiments of the present disclosure without creative efforts shall fall within the protection scope of the present disclosure.

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices.

In the embodiments of the present disclosure, the term "and/or" describes an association relationship between associated objects, indicating that there may be three relationships, for example, A and/or B may indicate that A exists alone, A and B exist at the same time, and B exists alone. The character "/" generally indicates an "or" relationship between the associated objects. In the embodiments of the present disclosure, the term "a plurality of" means two or more, and other quantifiers are similar.

In the embodiments of the present disclosure, words such as "exemplary" or "for example" are used to represent examples, illustrations, or descriptions. Any embodiment or design scheme described as "example" or "for example" in the embodiments of the present disclosure should not be explained as being more preferred or having more advantages than another embodiment or design scheme. Exactly, words such as "exemplary" or "for example" are used to present related concepts in a specific manner.

The embodiments of the present disclosure are described below with reference to the accompanying drawings. The method, apparatus, and communications device for determining a dynamic codebook provided in the embodiments of the present disclosure may be applied to a wireless communications system. The wireless communication system may be a system using a fifth generation (5G) mobile communication technology (hereinafter referred to as a 5G system for short), and a person skilled in the art may understand that the 5G NR system is merely an example and is not limited.

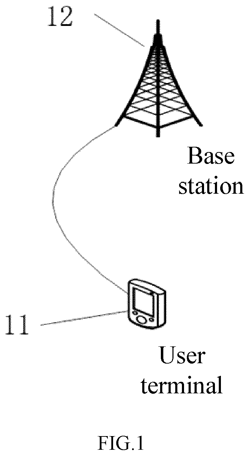

Referring to FIG. 1, FIG. 1 is a structural diagram of a network system applicable to an embodiment of the present disclosure, as shown in FIG. 1, including a user terminal 11 and a base station 12, wherein the user terminal 11 may be a user equipment (UE), for example, may be a mobile phone, a tablet personal computer, a laptop computer, a personal digital assistant (PDA), a mobile Internet device (MID) or a wearable device such as a wearable device, it should be noted that the specific type of the user terminal 11 is not limited in the embodiments of the present disclosure. The base station 12 may be a base station in a 5G and a later version (for example, a gNB, a 5G NR NB), or a base station in another communication system, or referred to as a node B. It should be noted that, in the embodiments of the present disclosure, only a 5G base station is used as an example, but a specific type of the base station 12 is not limited.

First, based on the technical solutions provided in the present disclosure, some technical terms that may be involved are introduced.

1. HARQ-ACK dynamic codebook type 2 (Type -2) mechanism

In a related 5G system, a mechanism for generating a dynamic HARQ-ACK codebook is supported, and the principle is that: when scheduling signaling DCI is transmitted, a downlink assignment index (DAI) indication is added, and the terminal side calculates the quantities of DCI and PDSCH actually transmitted by the base station according to the DAI count, so as to determine the quantity of PDSCHs that need to be fed back in the HARQ-ACK codebook.

The following uses a single carrier scenario (only C-DAI) to describe a process.

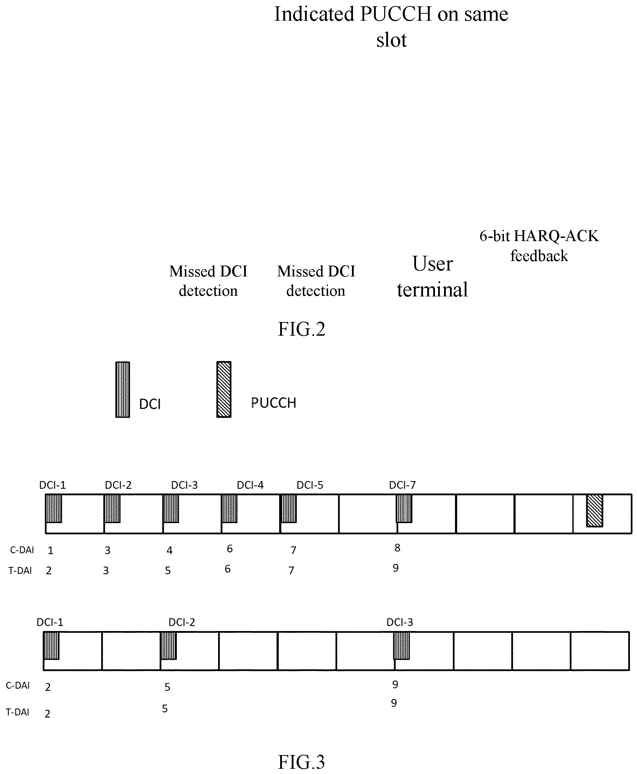

As shown in FIG. 2, the base station schedules 7 PDSCHs to the terminal, wherein the scheduling information indicates that the PUCCH feedback slot position is on the same slot, and it is desirable to feed back HARQ-ACK information of 7 PDSCHs (if each PDSCH corresponds to a bit of the feedback of one HARQ-ACK, the codebook of the HARQ-ACK is 7). Due to the uncertainty of the wireless channel, the terminal side misses the detection of the DCI -5 and the DCI -6, the terminal receives the C-DAI = 3 (corresponding bit information is 10) in scheduling signaling DCI -7, and the C-DAI of the last received DCI -4 = 4, C-DAI=4, the terminal can know that two DCIs are lost between the DCI -4 and the DCI -7 according to the DAI value, In this way, the total number of PDSCHs fed back by the HARQ-ACK may still be calculated as 7 by the terminal.

In the related art, it is assumed that there are no more than three DCIs that are missed by the terminal, so the DAI in the example uses 2-bit information for indication, and is referred to herein as a counter DAI (Counter DAI, C-DAI).

In addition, in order to support HARQ feedback of multiple carriers, a total downlink assignment index (total DAI, T-DAI) is introduced on the basis of C-DAI, 2-bit information indication is adopted, C-DAI, and T-DAI are used in combination to determine the quantity of PDSCHs actually fed back, so as to determine the codebook length of the HARQ-ACK, as shown in FIG. 3.

For ease of description, values of the C-DAI/T-DAI are represented as a non-cyclic decimal, wherein the C-DAI indicates a sequence number of the currently scheduled PDSCH; for example, when C-DAI = 1, it indicates that the first DCI is scheduled. The T-DAI indicates the quantity of all scheduled PDSCHs at the corresponding DCI scheduling moment, for example, when T-DAI = 2, it indicates that two PDSCHs are scheduled in total. For another example, when T-DAI = 9, it indicates that 9 PDSCHs are scheduled in total.

2. A problem needs to be solved in a multi-carrier scheduling scenario

Problem 1 (C-DAI counting order): when the DCI schedules PDSCHs of multiple cells, how to determine the counting order of the C-DAI.

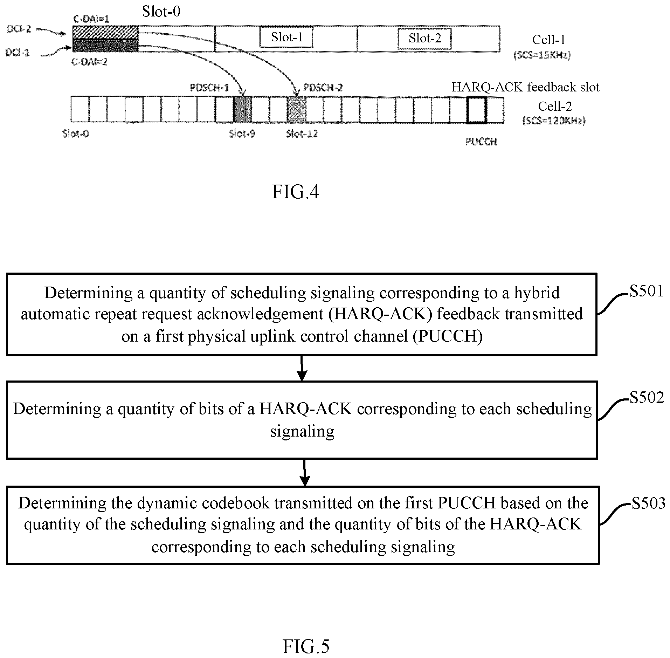

As shown in FIG. 4, it is assumed that at the terminal side, the detected scheduling signaling and scheduling data are as follows:

DCI -1: C-DAI in the scheduling signaling = 1, and the scheduled data is PDSCH -1 on cell-1 and PDSCH -2 on cell-2;

DCI -2: C-DAI in the scheduling signaling = 2, and the scheduled data is PDSCH -4 on cell-2, PDSCH -3 on cell-3

On the terminal side, when the DCI -1 and the DCI -2 and the corresponding C-DAI are detected, the counting order needs to be explicitly counted, and which cell needs to be explicitly calculated; because different counting sequences affect the quantity of receiving scheduling signaling calculated by the terminal, the generation sequence of the HARQ-ACK codebook is also affected.

Problem 2 (each DCI schedules the quantity of bits of the corresponding HARQ-ACK feedback): the quantity of PDSCHs whose HARQ needs to be fed back by each DCI is calculated, that is, the quantity of HARQ-ACK feedback bits;

It is assumed that a possible TDRA table is configured for a scenario in which PDSCHs of multiple cells are scheduled by one DCI, as shown in Table 1:

TABLE 1. Multi-cell PDSCH scheduling TDRA table

| Row index | Cell-1 ( $N_{TB,max}^{DL} = 2$ ) | Cell-2 ( $N_{TB,max}^{DL} = 1$ ) | Cell-3 ( $N_{TB,max}^{DL} = 2$ ) | Cell-4 ( $N_{TB,max}^{DL} = 1$ ) |
|---|---|---|---|---|
| 0 | K0=2:SLIV=1 | K0=3; SLIV=2 | NULL | NULL |
| 1 | NULL | K0=6; SLIV=6 | K0=0; SLIV=7 | K0=2; SLIV=7 |

(continued)

| Row index | Cell-1 ( $N_{TB,max}^{DL} =$ 2) | Cell-2 ( $N_{TB,max}^{DL} =$ 1) | Cell-3 ( $N_{TB,max}^{DL} =$ 2) | Cell-4 ( $N_{TB,max}^{DL} =$ 1) |
|---|---|---|---|---|
| 2 | K0=1; SLIV=5 | K0=3; SLIV=6 | NULL | K0=5; SLIV=7 |

Note:

$N_{TB,max}^{DL} = 2$ on a cell indicates that the HARQ-ACK information fed back by the cell is 2 bits (each PDSCH);

$N_{TB,max}^{DL} = 1$ on a cell indicates that the HARQ-ACK information fed back by the cell is 1 bit (each PDSCH).

In the related art, the scheduling condition of only one cell is described, and the quantity of HARQ-ACKs that each DCI needs to feed back in the case of multi-cell scheduling is not determined. For the above problem 1 (C-DAI counting order), the related art does not cover the scenario of multi-cell PDSCH scheduling, and the related art cannot solve the problem of how to determine the C-DAI counting order in the case of multi-cell scheduling; and for the above problem 2, the related art considers that there is one $N_{TB,max}^{DL} = 2$ , the length of the HARQ-ACK is calculated on all cells according to $N_{TB,max}^{DL} = 2$ , so that the useful bit proportion of the HARQ-ACK feedback is reduced, which causes waste of air interface resources.

Based on analysis, embodiments of the present disclosure provide a method and an apparatus of determining a dynamic codebook, and a communication device, to resolve a problem of how to generate a HARQ-ACK dynamic codebook when one DCI schedules PDSCHs in a plurality of carriers.

The method and the apparatus are based on the same application concept, and because the method and the apparatus solve a similar principle of a problem, the implementation of the apparatus and the method may refer to each other, and details are not described herein again.

As shown in FIG. 5, an embodiment of the present disclosure provides a method of determining a dynamic codebook, performed by a communication device. The method includes:

Step S501: determining the quantity of pieces of scheduling signaling corresponding to a hybrid automatic repeat request acknowledgement (HARQ-ACK) feedback transmitted on a first physical uplink control channel (PUCCH); The at least one piece of scheduling signaling schedules physical downlink shared channels (PDSCHs) of at least two cells; that is, the embodiments of the present disclosure are applicable to a case wherein there is at least one piece of scheduling signaling to schedule PDSCHs of at least two cells.

Step S502: determining the quantity of bits of the HARQ-ACK corresponding to each piece of scheduling signaling;

Step S503: determining a dynamic codebook transmitted on the first PUCCH based on the quantity of the pieces of scheduling signaling and the quantity of bits of the HARQ-ACK corresponding to each piece of scheduling signaling.

It should be noted that after the quantity of the pieces of scheduling signaling and the quantity of bits of the HARQ-ACK corresponding to each piece of scheduling signaling are obtained, the dynamic codebook may be determined, specifically, the determining the dynamic codebook transmitted on the first PUCCH mainly determines the length of the dynamic codebook transmitted on the first PUCCH (i.e. the total number of bits occupied by the dynamic codebook). Optionally, the method of determining the length of the dynamic codebook is to obtain the length of the dynamic codebook by calculating the product of the quantity of the pieces of scheduling signaling and the quantity of bits of the HARQ-ACK corresponding to each piece of scheduling signaling.

It should be noted that the piece of scheduling signaling refers to downlink control information (DCI) transmitted through a physical downlink control channel (PDCCH).

It should be noted that, in the embodiments of the present disclosure, in a case that at least one piece of scheduling signaling schedules PDSCHs of at least two cells, the dynamic codebook transmitted on the first PUCCH is determined based on the quantity of pieces of scheduling signaling corresponding to the HARQ-ACK feedback transmitted on the first PUCCH and the quantity of bits of the HARQ-ACK corresponding to each piece of scheduling signaling, so as to ensure that dynamic codebook transmission can also be accurately performed when there is at least one piece of scheduling signaling for scheduling PDSCHs of at least two cells.

It should be noted that the embodiments of the present disclosure are applicable to a terminal device, and are also applicable to a network device, that is, the terminal device and the network device perform dynamic codebook transmission in the same manner; and for the terminal device, the terminal device performs dynamic codebook transmission, and the network device performs the dynamic codebook reception.

Specific implementations of the present disclosure are illustrated below from two aspects of obtaining the quantity of pieces of scheduling signaling and the quantity of bits of the HARQ-ACK corresponding to the pieces of scheduling signaling, respectively.

I. Determination of the Number of Scheduling signaling

Optionally, in at least one embodiment of the present disclosure, a specific implementation of the determining the number of pieces of scheduling signaling corresponding to HARQ-ACK feedback transmitted on a first PUCCH includes:

Step S5011: determining a target cell on which the transmitted counting downlink assignment index C-DAI counts;
It should be noted that the target cell may be understood as a serving cell that transmits scheduling signaling, and is also called a scheduling cell.

It should also be noted that the target cell on which the C-DAI counts refers to calculating the C-DAI to the target cell.

Optionally, the target cell is one of the cells scheduled by the pieces of scheduling signaling (also called a scheduled cell), or a cell that transmits the piece of scheduling signaling.

Further, the target cell is one of cells scheduled by the piece of scheduling signaling, and includes one of the following:

A11: a cell with a smallest cell index on the cells scheduled by the pieces of scheduling signaling;
For example, DCI -1 schedules PDSCHs on Cell-2, Cell-3, and Cell-4, and DCI -1 is transmitted on Cell-1, then the C-DAI of DCI -1 belongs to Cell-2.
A12: a cell with the largest cell index on the cells scheduled by the pieces of scheduling signaling;
For example, DCI -1 schedules PDSCHs on Cell-2, Cell-3, and Cell-5, and DCI -1 is transmitted on Cell-1, then the C-DAI of DCI -1 belongs to Cell-5.
A13: a cell, in which the reception time of the scheduled PDSCH is latest, on the cells scheduled by the pieces of scheduling signaling;
For example, DCI -1 schedules the PDSCHs on Cell-2, Cell-3, Cell-5, the reception time of the PDSCH on Cell-2 is slot 2, the reception time of the PDSCH on Cell-3 is slot 6, the reception time of PDSCH on Cell-4 is slot 8, DCI -1 is transmitted on Cell-1, and because slot 8 is later than slot 2 and slot 6, the C-DAI of DCI -1 belongs to Cell-4.

The target cell is the cell that transmits the piece of scheduling signaling, that is, the cell transmitting the scheduling signaling is the serving cell of the scheduling signaling; for example, DCI -1 schedules PDSCH on Cell-2, Cell-3, and Cell-4, and DCI -1 is transmitted on Cell-1, then the C-DAI of DCI -1 belongs to Cell-1.

It should be noted that the cell index may be a cell index configured based on carrier aggregation, or may be a cell index configured based on multi-cell scheduling, which is not limited herein.

Step S5012: determining a counting order of the C-DAI according to the target cell on which the C-DAI counts;
It should be noted that, due to the different counting orders of the C-DAI, the result that the terminal calculates the quantity of pieces of scheduling signaling is affected, and before the quantity of the pieces of scheduling signaling is determined, the counting order of the C-DAI needs to be determined first.

Optionally, in a case that the target cell is one of the cells scheduled by the piece of scheduling signaling, when the terminal configures the plurality of serving cells, the counting order of the C-DAI is as follows:

B11: on a cell, in the same PDCCH monitoring occasion, scheduling reception of two or more PDSCHs is supported, and then C-DAI counting is performed according to the start time of the PDSCHs (the PDSCH with the earlier start time is sequenced in the front);
B12: according to the index values of the serving cells, arranging the C-DAI corresponding to the serving cell with a small index value before the C-DAI corresponding to the serving cell with a large index value;
B13: according to the transmission occasions of the pieces of scheduling signaling, the C-DAI corresponding to the piece of scheduling signaling with an earlier transmission occasion is arranged before the C-DAI corresponding to the piece of scheduling signaling with a later transmission occasion.

Optionally, in a case that the target cell is a cell that transmits the piece of scheduling signaling, a specific implementation of determining the counting order of the C-DAI according to the target cell on which the C-DAI counts includes one or more of the following:

B21: in a case that two pieces of scheduling signaling exist in the same PDCCH transmission occasion, and at least one piece of scheduling signaling in the two pieces of scheduling signaling schedules PDSCHs of at least two cells, determining a counting order of the C-DAI according to the time of scheduling the PDSCHs of the multiple cells.

Optionally, in at least one embodiment of the present disclosure, the implementation manner of determining the counting order of the C-DAI according to the time of scheduling the PDSCHs of the multiple cells includes:

selecting, according to the order of scheduling the PDSCHs by the piece of scheduling signaling, the N-th PDSCHs respectively scheduled by two pieces of scheduling signaling;
if the target time of the N-th PDSCHs scheduled by the two pieces of scheduling signaling are different, arranging the C-DAI corresponding to the PDSCH with the earlier target time to be an earlier position;
N is an integer greater than or equal to 1, and the target time includes a start time or an end time.

This implementation means that for the PDSCHs scheduled by different pieces of scheduling signaling, the PDSCHs corresponding to different pieces of scheduling signaling arranged at the same sequencing position are compared according an ascending sequence of time of scheduling the PDSCHs by different pieces of scheduling signaling. In an example that the target time is the start time, for example, scheduling signaling 1 schedules the PDSCH 1 on the slot 2 and the PDSCH 2 on the slot 5, the scheduling signaling 2 schedules the PDSCH 3 on the slot 3 and the PDSCH 4 on the slot 5, and when the PDSCH 1 and the PDSCH 3 are compared, because the slot 2 is earlier than the slot 3, the C-DAI corresponding to the scheduling signaling 1 is arranged before the C-DAI corresponding to the scheduling signaling 2.

Optionally, the determining the counting order of the C-DAI according to the time of scheduling the PDSCHs of the multiple cells includes:

selecting, according to the order of the PDSCHs scheduled by the pieces of scheduling signaling, the N-th PDSCHs respectively scheduled by the two pieces of scheduling signaling; and one of the following:

B211: if the target time of the N-th PDSCHs scheduled by the two pieces of scheduling signaling are the same, selecting the (N+1)-th PDSCHs respectively scheduled by the two pieces of scheduling signaling, and if the target time of the (N +1)-th PDSCH scheduled by the two pieces of scheduling signaling are different, arranging the C-DAI corresponding to the PDSCH with the earlier target time at an earlier position.

For example, taking the target time being the start time as an example, the comparison starts from the first PDSCH scheduled by each piece of scheduling signaling, if the start time of the first PDSCHs corresponding to the two pieces of scheduling signaling are different, if the start time of the first PDSCHs corresponding to the two pieces of scheduling signaling is the same, continuing to compare the second PDSCH according to the foregoing principle until it is determined that the counting order of the C-DAIs corresponding to all the pieces of scheduling signaling is obtained. For example, if the comparison starts from the first PDSCH scheduled by each piece of scheduling signaling, if the end time of the first PDSCH corresponding to the two pieces of scheduling signaling are different, if the end time of the first PDSCH corresponding to the two pieces of scheduling signaling is the same, the second PDSCH continues to be compared according to the foregoing principle until it is determined that the counting order of the C-DAIs corresponding to all the pieces of scheduling signaling is obtained.

B212: if the target time of the N-th PDSCHs scheduled by the two pieces of scheduling signaling is the same, determining the counting order of the C-DAIs corresponding to the two pieces of scheduling signaling according to the target cells on which the C-DAIs count;

Taking the target time being the start time as an example, this case may also be understood as that the comparison starts from first PDSCH scheduled by each piece of scheduling signaling, and if the start time of the first PDSCHs corresponding to the two pieces of scheduling signaling are different, then the C-DAI corresponding to the PDSCH with the earlier start time is arranged in the front. If the start time of the first PDSCHs corresponding to the two pieces of scheduling signaling is the same, the indexes of the target cells on which the two pieces of scheduling signaling count are compared, and the C-DAI of the piece of scheduling signaling corresponding to the cell with the larger index may be arranged in front, or the C-DAI of the piece of scheduling signaling corresponding to the cell with the smaller index may be arranged in front.

B22: determining a counting order of the C-DAIs according to the indexes of the target cells on which the C-DAIs count.

In this case, on the target cells on which the different C-DAIs count, the C-DAI corresponding to the target cell with a small index value is arranged before the C-DAI corresponding to the target cell with a large index value.

B23: determining a counting order of the C-DAIs according to the transmission occasions of the pieces of scheduling signaling.

In this case, in different pieces of scheduling signaling, the C-DAI corresponding to the piece of scheduling signaling with the earlier transmission occasion is arranged before the C-DAI corresponding to the piece of scheduling signaling with the later transmission occasion.

It should also be noted that, in the process of starting the comparison from the first PDSCH scheduled by each piece of scheduling signaling, if the corresponding scheduling signaling does not schedule the PDSCH or does not schedule the second PDSCH, it is considered that the start time of the PDSCH is the earliest.

Step S5013: determining the quantity of pieces of scheduling signaling corresponding to the HARQ-ACK feedback transmitted on the first PUCCHs according to the counting order of the C-DAIs;

It should be noted that, after determining the counting order of the C-DAIs, the quantity of the pieces of scheduling signaling may be obtained through statistics based on the arrangement of the C-DAIs; for example, taking the counting period of the C-DAI being 4 as an example, when the obtained counting order is 1, 3, 4, 2, and 3, it may be determined that seven scheduling signaling is transmitted in total, and the quantity of the pieces of scheduling signaling is 7.

The following separately describes the foregoing two manners of determining the quantity of pieces of scheduling signaling.

Case 1: C-DAI for a scheduling DCI belongs to a scheduled cell

When the PUCCH slots of the HARQ-ACK feedback indicated by the plurality of scheduling signaling belong to the same slot, it is determined that the implementation process of the quantity of pieces of scheduling signaling for HARQ-ACK feedback in the same slot mainly includes: step A1, first determining that the C-DAI of the scheduling DCI belongs to a scheduled cell;

when one DCI schedules PDSCHs of multiple cells, the C-DAI belongs to a cell with the smallest cell index on the scheduled cells;

Certainly, the scheduling DCI and the corresponding C-DAI may also be determined by means of protocols or indicated by high-layer signaling to indicate that the scheduling DCI and the corresponding C-DAI belong to a specific cell (for example, the cell with the largest cell index on the scheduled cells, the cell with the latest PDSCH receiving time on the scheduled cells).

Step A2: determining the counting order of the C-DAIs according to the following order:

a first order: on a cell, in the same PDCCH monitoring occasion, two or more PDSCH scheduling receptions are supported, and then C-DAI counting is performed according to the order of start time of the PDSCHs (the C-DAI with the earlier start time of PDSCH is arranged in the front);

a second order: arranging the C-DAI corresponding to the serving cell with a small index value before the C-DAI corresponding to the serving cell with a large index value according to the index values of the serving cells;

a third order: the C-DAI corresponding to the piece of scheduling signaling at the earlier transmission occasion is arranged in front of the C-DAI corresponding to the piece of scheduling signaling at the later transmission occasion according to the transmission occasions of the pieces of scheduling signaling.

Step A3: determining the quantity of pieces of scheduling signaling for HARQ-ACK feedback in the same slot according to the counting order of the C-DAIs.

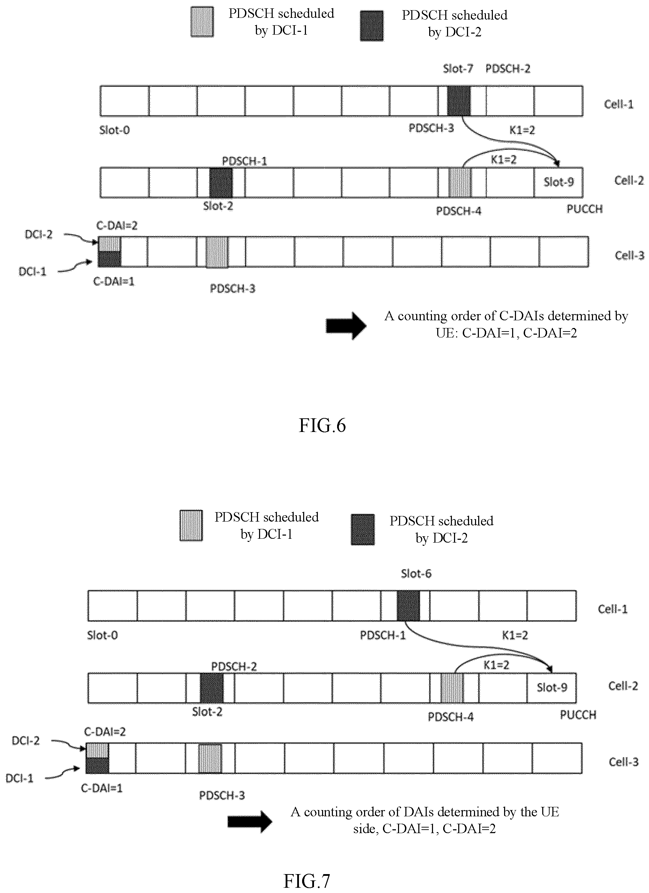

As shown in FIG. 6, it is assumed that at the terminal side, the detected scheduling signaling and scheduling data are as follows:

DCI -1: C-DAI in the scheduling signaling = 1, and the scheduled data is PDSCH -1 on Cell-1 and PDSCH -2 on Cell-2;

DCI -2: C-DAI in the scheduling signaling = 2, and the scheduled data is PDSCH -4 on Cell-2, PDSCH -3 on Cell-3;

The DCI -1 and the DCI -2 are detected on the same MO, and the terminal determines the following:

DCI -1 schedules the PDSCHs on Cell-1 and Cell-2, so the C-DAI of the corresponding DCI -1 is considered to belong to Cell-1, or is considered to be detected on Cell-1;

DCI -2 schedules the PDSCHs on Cell-2 and Cell-3, so the corresponding DCI -2 and C-DAI are considered to belong to Cell-2, or are considered to be detected on Cell-2.

According to the counting order 2 (the second order) of the C-DAI, the terminal may determine: DCI -1 is in the front (according to the foregoing manner: DCI -1 and corresponding C-DAI = 1 are determined to belong to Cell-1), and DCI -2 is in the rear (according to the foregoing manner: DCI -2 and corresponding C-DAI = 2 are determined to belong to Cell-2).

That is, in the PUCCH slot corresponding to the feedback of the HARQ-ACK, the terminal considers that two pieces of DCI are received.

Case 2: The C-DAI of the scheduling DCI belongs to a cell transmitting the DCI.

When the PUCCH slots of the HARQ-ACK feedback indicated by the plurality of pieces of scheduling signaling belong to the same slot, it is determined that the implementation process of the quantity of pieces of scheduling signaling for HARQ-ACK feedback in the same slot mainly includes:

Step B1: the C-DAI of the scheduling DCI belongs to by default the cell transmitting the DCI (i.e., the scheduling cell).

When one DCI schedules PDSCHs of multiple cells, it is specified through a protocol that the C-DAI belongs to a cell that transmits the DCI; regardless of whether there is PDSCH scheduling on the cell transmitting the DCI.

Step B2, for the multi-cell scheduling situation, determining the counting order of the C-DAIs according to the following sequence:

a first order: on a cell, in a same PDCCH monitoring occasion, a terminal supports two scheduling signaling DCIs of downlink PDSCHs, at least one piece of scheduling signaling is a scheduling signaling that is "1 DCI schedules PDSCHs of a plurality of cells" (i.e. the terminal detects a plurality of DCIs on one PDCCH monitoring occasion, wherein at least one DCI of the plurality of DCIs schedules PDSCHs of a plurality of cells), which includes one of the following two implementations:

Implementation 1 (determining based on the start time of scheduling PDSCHs of multiple cells):

in this implementation, determining the counting order of C-DAIs based on the start time and the end time of scheduling the PDSCHs of the plurality of cells; that is, the time of scheduling (one or more) PDSCHs by the two DCI is compared in sequence until the DCI which schedules with the earlier start time is obtained, or PDSCHs scheduled by one DCI is exhausted; then the DCI with the earlier start time, or the DCI, the PDSCHs of which are exhausted first, is taken as an earlier C-DAI count;

in the PDSCHs of a plurality of cells scheduled by the DCIs, sequentially comparing the scheduling start time of the PDSCHs until the PDSCH with the earlier scheduling start time is obtained or all PDSCH comparisons of one DCI (that is, there is no remaining PDSCH comparison) are finished, then the DCI with the earlier PDSCH scheduling time or the DCI with no remaining PDSCH comparison is counted first;

The specific process is as follows:

In scheduling of a plurality of DCIs, if the start time of the first scheduled PDSCHs are different, the start time of the first scheduled PDSCHs is sequenced (the first PDSCH witch the earlier start time is ranked in the front); otherwise (that is, the start time of the first scheduled PDSCHs is the same), if the start time of the second scheduled PDSCHs is different, then the start time of the second scheduled PDSCHs is sequenced (that is, the second scheduled PDSCH with the earlier start time is ranked in the front), and so on, until the counting order of the C-DAIs corresponding to the DCIs is determined.

Implementation 2 (on the basis of the implementation 1 + a serving cell index (for example, a serving cell identity (Identity, ID))):

in a plurality of cells PDSCHs scheduled by the plurality of DCIs, for example, the start time of the first scheduled PDSCHs is different, the start time of the first scheduled PDSCHs is sequenced (the first scheduled PDSCH with the earlier start time is ranked in the front); otherwise, the serving cell IDs of the cells transmitting the PDSCHs are ranked, and the serving cell ID which is small is ranked in the front (or the serving cell ID which is large is ranked in the rear).

Second order: determining the counting order of the C-DAIs according to the indexes of the serving cells on which the C-DAIs count.

Third order: determining the counting order of the C-DAIs according to the monitoring occasion of the pieces of scheduling signaling.

Step B3: determining the quantity of pieces of scheduling signaling for which HARQ-ACK feedback is performed in the same slot according to the counting order of the C-DAIs.

As shown in FIG. 7, it is assumed that at the terminal side, the detected scheduling signaling and scheduling data are as follows:

DCI -1: C-DAI in the scheduling signaling = 1, scheduled data is PDSCH -1 on Cell-1, PDSCH -2 on Cell-2, PDSCH -2 on Cell-2, and symbol #3 on the slot 2;

DCI -2: C-DAI in the scheduling signaling = 2, scheduled data is PDSCH -4 on Cell-2 on the slot 7, PDSCH -3 on Cell-3, and symbol #3 on the slot 2.

According to the method of determining the cell on which the C-DAI counts (according to the start time of scheduling the PDSCH), it can be determined that:

for the scheduled first PDSCH (in time domain), DCI -1 schedules PDSCH -2 at symbol #3 of slot 2, and DCI -2 schedules PDSCH -3 at symbol #3 of slot 2;
for the scheduled second PDSCH (in time domain), DCI -1 schedules PDSCH -1 of slot 6, and DCI -2 schedules PDSCH -4 of slot 7.

That is, the second PDSCH (PDSCH -1) scheduled by the DCI -1 is earlier than the second PDSCH (PDSCH -4) scheduled by the DCI -2, and according to the implementation 1 of the first order of C-DAIs, the DCI -1 (C-DAI = 1) is in the front, and DCI-2 (C-DAI=2) is in the rear, the terminal may know that the PDSCH decoding result information corresponding to the two pieces of scheduling signaling needs to be fed back on the PUCCH of the slot 9.

Second. Determination of the quantity of bits of HARQ-ACK corresponding to each piece of scheduling signaling.

Optionally, in at least one embodiment of the present disclosure, two manners of determining the quantity of bits of the HARQ-ACK corresponding to each piece of scheduling signaling are provided, specifically:

Specific Implementation 1:

In this implementation, an implementation manner of determining the quantity of bits of the HARQ-ACK corresponding to each piece of scheduling signaling includes:

Step S5021: obtaining the maximum quantity of the schedulable cells corresponding to one piece of scheduling signaling;
optionally, an implementation manner of obtaining the maximum quantity of the schedulable cells corresponding to one piece of scheduling signaling may include one of the following:

C11: determining the maximum quantity of the schedulable cells corresponding to one piece of scheduling signaling configured by higher layer signaling;
for example, for the terminal device, the terminal device may receive the maximum quantity of the schedulable cells corresponding to one piece of scheduling signaling from higher layer signaling; for the network device, the network device may directly determine the maximum quantity of the schedulable cells corresponding to one piece of scheduling signaling according to higher layer signaling.

For example, when the network device (for example, the base station) configures, by using the following higher layer signaling, information about a plurality of cells that can be scheduled by one DCI when the scheduling signaling is transmitted on the cell 1:

MultiCarrierScheduled-Config SEQUENCE(SIZE(1..maxschueldingCell)) OF scheduledcelllist;

in the configuration message corresponding to the higher layer signaling, the SEQUENCE represents configuring a plurality of information items, and configuring the maximum quantity maxschedulingCell of scheduled cells.

The information contained in the scheduledcelllist has a serving cell ID (serving-cell-ID).

For example, when maxschedulingCell = 4, it indicates that the protocol supports one DCI being capable of scheduling PDSCHs on up to 4 serving cells, but the actual configuration may be less than or equal to 4, for example, 2, 3, and 4;

in this way, the terminal may know, based on the configuration command, the maximum number of cells that can be scheduled by the DCI transmitted on the cell 1.
C12: determining the maximum quantity of the schedulable cells corresponding to one piece of scheduling signaling according to the configured first target time domain resource assignment (TDRA) table;
In other words, a maximum quantity of the schedulable cells corresponding to one piece of scheduling signaling may be determined by the terminal device and the network device based on the first target TDRA table.

Optionally, the network device (for example, a base station) configures a multi-cell scheduling TDRA table on the cell 1 through high-layer signaling, and the terminal determines the quantity of scheduling cells from the multi-cell scheduling TDRA table; optionally, the first target TDRA table may also be specified by a protocol, that is, the first target TDRA table is configured in a unified manner, and can be known by both the terminal and the base station without performing interaction between the first target TDRA table and the base station.

For example, the base station configures the TDRA table as shown in Table 1, and from the TDRA table, the terminal can infer the DCI transmitted on the cell 1, regardless of the scheduled PDSCHs identified as the invalid SLIV (NULL), and the maximum number of scheduled cells is 4.

It should also be noted that, the manner of determining the first target TDRA table may include at least one of the following manners:

Manner 1: for a scheduling cell, configuring a TDRA table corresponding to multi-cell scheduling, and determining the TDRA table as a first target TDRA table;

Manner 2: in a case that each cell of the TDRA table is configured separately (for example, based on a bandwidth part (BWP) configuration), for the activated cell, the TDRA table corresponding to the activated BWP is determined as the first target TDRA table, and for the deactivated cell, the TDRA table corresponding to the first activated downlink BWP is determined as the first target TDRA table; or the maximum value of the maximum quantities of the schedulable cells configured in the TDRA table corresponding to all the BWPs is determined as the first target TDRA table regardless of the activated cell or the deactivated cell.

Step S5022: according to the maximum quantity of the schedulable cells and the quantity ( $N_{TB,max}^{DL}$ ), of bits of feedback on each schedulable cell, determining the quantity of bits of the HARQ-ACK corresponding to the scheduling signaling; and

It should be noted that, $N_{TB,max}^{DL}$ is pre-configured for each cell, and after the maximum quantity of the schedulable cells and $N_{TB,max}^{DL}$ corresponding to each cell are obtained, the $N_{TB,max}^{DL}$ corresponding to the schedulable cells may be added together, and the number of bits of the HARQ-ACK corresponding to one piece of scheduling signaling is obtained, and is used as the quantity of bits of the HARQ-ACK corresponding to each piece of scheduling signaling.

It should be further noted that, when the method of determining the first target TDRA table in the first manner is adopted, if a plurality of scheduling cells exist, the TDRA tables used by the scheduling signaling and corresponding to different scheduling cells are different, and in this case, the quantity of bits of the HARQ-ACK corresponding to one piece of scheduling signaling may be determined based on each TDRA table, and then the maximum value of the quantities of bits of the HARQ-ACK corresponding to one piece of scheduling signaling related to all the TDRA tables is selected as the quantity of bits of the HARQ-ACK corresponding to each piece of scheduling signaling.

The specific application in this case is as follows.

Specific application condition 3: the quantity of bits of the HARQ-ACK corresponding to one piece of DCI is determined according to the configured maximum number of schedulable cells.

The following processes are mainly included:

Step C1: determining the configured maximum quantity C of the schedulable cells, and $N_{TB,max}^{DL}$ corresponding to each cell. The terminal may determine the maximum quantity C of schedulable cells and $N_{TB,max}^{DL}$ of each cell according to one of the following manners:

manner 1: the base station directly configures information of the cells schedulable by one DCI through higher layer signaling.

after receiving the higher layer signaling transmitted by the base station, the terminal may know the maximum quantity of cells schedulable by the DCI transmitted on a certain cell and the corresponding cell information (that is, $N_{TB,max}^{DL}$ corresponding to the cell).

It is assumed that the maximum quantity related to multi-cell scheduling information configured by the higher layer signaling is 4, that is, the maximum number of cells that can be scheduled by the DCI transmitted on the cell 1 is 4, and the specific scheduling cells and the corresponding cell information are shown in Table 2.

Table 2 schedules cells and corresponding cell information

| Scheduling information of multiple cells (Cell ID) | $N_{TB,max}^{DL}$ of scheduled cells |
|---|---|
| serving-cell-ID =1 | 2 |
| serving-cell-ID =2 | 1 |
| serving-cell-ID =3 | 2 |
| serving-cell-ID =4 | 1 |

The value $N_{TB,max}^{DL}$ of each cell is determined according to respective cell configuration, which belongs to the related art, and details are not described herein again;

Table 2 shows that:

$$O_{c(1)}^{HARQ} = N_{TB,max}^{DL}(1) = 2, \quad O_{c(2)}^{HARQ} = N_{TB,max}^{DL}(2) = 1;$$

$$O_{c(3)}^{HARQ} = N_{TB,max}^{DL}(3) = 2, \quad O_{c(4)}^{HARQ} = N_{TB,max}^{DL}(4) = 1.$$

wherein, $O_{c(i)}^{HARQ}$ is a quantity of bits of HARQ-ACK needing to be feedback and corresponding to the ith cell;

$N_{TB,max}^{DL}(i)$ is a quantity of bits of feedback on the ith cell;

manner 2: the terminal determines scheduling cell information according to the TDRA table for the configured multi-cell scheduling;

for example, the base station configures a multi-cell scheduling TDRA table on the cell-1 through high-layer signaling; the terminal determines the quantity of scheduling cells from the multi-cell scheduling TDRA table; for example, the base station configures the TDRA table as shown in Table 1, the terminal can infer the DCI transmitted on the cell-1 according to Table 1, regardless of the scheduled PDSCH identified as invalid SLIV (Null), and the maximum number of schedulable cells is 4

It can be seen from Table 1 that:

$$O_{c(1)}^{HARQ} = N_{TB,max}^{DL}(1) = 2, \quad O_{c(2)}^{HARQ} = N_{TB,max}^{DL}(2) = 1$$

$$O_{c(3)}^{HARQ} = N_{TB,max}^{DL}(3) = 2, \quad O_{c(4)}^{HARQ} = N_{TB,max}^{DL}(4) = 1$$

step C2: determining the quantity M of bits of HARQ-ACK feedback for each piece of scheduling signaling; accumulating the quantities of bits of feedback for each PDSCH of all scheduled cells, $O_{DCI}^{HARQ} = \sum_{i=0}^{i=C-1} O_{c(i)}^{HARQ}$, that is, the quantity of bits of HARQ-ACK needing to be fed back for each DCI is obtained.

Taking step C1 as an example, the quantity of bits of the fed back HARQ-ACK is M = 6.

It should be noted that, when the base station configures the multi-cell scheduling information on the plurality of cells, the terminal needs to calculate the M values corresponding to different cells, and then the maximum value of the M values corresponding to the plurality of cells is taken as the quantity of bits of the fed back HARQ-ACK in case of one piece of DCI scheduling signaling; For example, if the base station configures the information of step 1 on cell-1, cell-2 and cell-3, it is assumed that the calculated values are: M(1) = 6 of cell-1, M(2) of = 8 cell-2, and M(3) = 5 of cell-3, then the quantity of bits of the fed back HARQ-ACK in case of one piece of DCI scheduling signaling is 8.

Optionally, when a plurality of BWPs are configured on one cell, the terminal determines, according to a TDRA table configured corresponding to the activated BWP and $N_{\mathrm{TB,max}}^{\mathrm{DL}}$, as a TDRA table and $N_{\mathrm{TB,max}}^{\mathrm{DL}}$ used by a cell, or determines, according to all configured TDRA tables and the maximum value of $N_{\mathrm{TB,max}}^{\mathrm{DL}}$ of multiple BWPs, as the TDRA table and the $N_{\mathrm{TB,max}}^{\mathrm{DL}}$ used by a cell. Determining, according to all configured TDRA tables and the maximum value of $N_{\mathrm{TB,max}}^{\mathrm{DL}}$ of multiple BWPs, as the TDRA table and the $N_{\mathrm{TB,max}}^{\mathrm{DL}}$ used by a cell may be shown in the following Table 3.

Implementations of different $N_{\mathrm{TB,max}}^{\mathrm{DL}}$ configured for different BWPs are illustrated below by way of following Table 3.

Table 3,

| $N_{TB,max}^{DL}$ in a case that a scheduling cell includes a plurality of BWP configurations | | | | |
|---|---|---|---|---|
| Scheduling information of multiple cells | BWP=00 $N_{TB,max}^{DL}$ | BWP=01 $N_{TB,max}^{DL}$ | BWP=10 $N_{TB,max}^{DL}$ | BWP=11 $N_{TB,max}^{DL}$ |
| cell-ID =1 | 2 | 1 | 2 | 2 |
| **cell-ID** =2 | 1 | 1 | 2 | 1 |
| **cell-ID** =3 | 2 | 1 | 2 | 2 |
| cell-ID =4 | 1 | 1 | 1 | 1 |
| Total (bit quantity) | 6 | 4 | 7 | 6 |

As shown in Table 3, for the same cell, the values for different BWP ID configurations are different. In the indication of the scheduling signaling from the base station, the BWP ID may indicate any one of the BWP ID = 00/01/10/11. For any one multi-cell scheduling signaling, for enabling the base station and the terminal to have the same bit number of HARQ-ACK information feedback, the "BWP ID indication" corresponding to the maximum total number of bits of the HARQ-ACK feedback is taken, such as 7 bits in the above table.

When the scheduling signaling indicates BWP = 00, the quantity of the fed back HARQ-ACK for scheduling the PDSCH by one DCI is 6.

When the scheduling signaling indicates BWP = 01, the quantity of the fed back HARQ-ACK for scheduling the PDSCH by one DCI is 4.

When the scheduling signaling indicates BWP = 00, the quantity of the fed back HARQ-ACK for scheduling the PDSCH by one DCI is 6.

When the scheduling signaling indicates BWP = 10, the quantity of the fed back HARQ-ACK for scheduling the PDSCH by one DCI is 7.

When the scheduling signaling indicates BWP = 11, the quantity of the fed back HARQ-ACK for scheduling the PDSCH by one DCI is 6.

Specific Implementation 2:

In this implementation, an implementation manner of determining the quantity of bits of the HARQ-ACK corresponding to each piece of scheduling signaling includes:

Step S5023: obtaining a second target TDRA table;

optionally, the second target TDRA table may be configured by a higher layer signaling or specified in a protocol; further, the specific implementation manner of obtaining the second target TDRA table may include at least one of the following manners:

Manner 1: for a scheduling cell, configuring one TDRA table corresponding to multi-cell scheduling, and determining the TDRA table as a second target TDRA table;

Manner 2: if each cell of the TDRA table is configured separately (for example: configured based on BWP), then for the activated cell, the TDRA table corresponding to the activated BWP is determined as the second target TDRA table, and for the deactivated cell, the TDRA table corresponding to the first activated downlink BWP is determined as the second target TDRA table, or the TDRA table corresponding to the maximum value of the maximum quantities of schedulable cells configured in the TDRA tables corresponding to all BWPs is determined as the second target TDRA table regardless of the activated cell or the deactivated cell.

Step S5024: determining a schedulable cell in each row in the second target TDRA table;

specifically, schedulable cells in each row is determined according to the multi-cell time domain indication information of each row in the second target TDRA table; for example, the quantity of valid time domain information parameters counted in each row is denoted as the quantity of schedulable cells in each row.

It should be noted that, when scheduling signaling is performed based on a row in the TDRA table, that is, when one DCI schedules time domain information of a row in the TDRA table, and therefore, this case is to determine the quantity of cells actually scheduled (schedulable) in each row in the TDRA table.

Step S5025: determining, according to the quantity of bits of feedback of the schedulable cells and each cell in each row, the quantity of bits of the HARQ-ACK corresponding to one piece of scheduling signaling.

Optionally, a further implementation of this step is:

Step S50251: determining the quantity of bits of the HARQ-ACK corresponding to each row according to the quantity of bits of feedback of the schedulable cell or each cell in each row;

it should be noted that the quantity of bits of the HARQ-ACK corresponding to each row is the sum of the quantities ( $N_{TB,max}^{DL}$ ) of bits of feedback of the schedulable cell in each row.

Step S50252: selecting, according to the quantity of bits of the HARQ-ACK corresponding to each row, the maximum quantity as the quantity of bits of the HARQ-ACK corresponding to one piece of scheduling signaling.

It should also be noted that, when the method of determining the second target TDRA table in the manner 1 is adopted, if a plurality of scheduling cells exist, the TDRA tables used by the pieces of scheduling signaling and corresponding to different scheduling cells are different, and in this case, the quantity of bits of the HARQ-ACK corresponding to one piece of scheduling signaling may be determined based on each TDRA table, and then the TDRA table corresponding to the maximum quantity in the quantities of bits of HARQ-ACK corresponding to one piece of scheduling signaling corresponding to all TDRA tables is used as the quantity of bits of the HARQ-ACK corresponding to each scheduling signaling.

The specific application in this case is as follows.

Specific application condition 4: the quantity of bits of the HARQ-ACK corresponding to one DCI is determined according to the quantity of cells actually involved in scheduling, which mainly includes following processes:

Step D1: determining cells involved in multi-cell scheduling, and $N_{TB,max}^{DL}$ of each cell;

the terminal may determine the cells involved in the multi-cell scheduling and $N_{TB,max}^{DL}$ of each cell according to the following manner:

manner 1: the base station directly configures through higher layer signaling a cell that can be scheduled by DCI;

For example, when the base station is configured to send the piece of scheduling signaling on the cell-1 through the following high-layer signaling, one DCI may schedule information of a plurality of cells:

MultiCarrierScheduled-Config
SEQUENCE(SIZE(1..maxschueldingCell))OF scheduledcelllist;
In the above configuration message, the SEQUENCE represents configuring a plurality of information items, and configures the maximum number maxschedulingCell of scheduled cells.

The information contained in the scheduledcelllist has a serving cell ID (Serving-Cell-ID).

For example, when maxschedulingCell = 4, it indicates that the protocol specifies that one DCI may schedule PDSCHs on 4 serving cells at most, but the number of the serving cells may be less than 4 in an actual configuration, for example, 2, 3, and 4;

In this way, the terminal may know, based on the configuration command, the DCI transmitted on the cell-1, a quantity of cells that can be scheduled, and corresponding cell information.

It is assumed that the quantity of scheduled multiple cells configured by the message is 4, that is, the DCI transmitted on the cell-1, and the maximum number of schedulable cells is 4, as shown in Table 2.

In addition, $N_{TB,max}^{DL}$ of each cell belongs to related art, and will not be repeated here, and the TDRA table of each cell is determined by configuration of each cell (see manner 2 in step S5023); it is assumed that through the foregoing steps, the terminal may learn the TDRA table for multi-cell scheduling shown in Table 1;

Manner 2: the terminal determines the information of the actual scheduled cell according to the configured TDRA table for multi-cell scheduling;

for example, the base station configures a TDRA table of multi-cell scheduling on the cell-1 through higher layer signaling, wherein the TDRA table and $N_{TB,max}^{DL}$ may be configured separately (see manner 1 in step S5023), and values configured by respective cells in manner 1 are different, or are the same, which are not limited herein;

For example, the base station configures a table as shown in Table 2. The value $O_{c(i,\ r)}^{HARQ}$ of quantity of bits of feedback in each row of each cell may be known from the TDRA tables of the manner 1 or the manner 2, wherein

$O_{c(i,\ r)}^{HARQ} = N_{TB,max}^{DL}(i)$, if being scheduled; otherwise $O_{c(i,\ r)}^{HARQ} = 0$. Taking cell-1 as an example:

$O_{c(i=1,\ r=0)}^{HARQ} = N_{TB,max}^{DL}(1) = 2$, the row index r=0; $O_{c(i=1,\ r=1)}^{HARQ} = N_{TB,max}^{DL}(1) = 0$, the row index r = 1; $O_{c(i=1,\ r=2)}^{HARQ} = N_{TB,max}^{DL}(1) = 2$, the row index r = 2.

Step D 2: determining the quantity M of bits of HARQ-ACK feedback of each piece of scheduling signaling;

In calculation in each row in the TDRA table, the quantities of feedback bits of all pieces of scheduling signaling are accumulated $O_{DCI\ (r)}^{HARQ} = \sum_{i=0}^{i=C} O_{c(i,r)}^{HARQ}$.

Taking the maximum value of the quantity of HARQ-ACK feedback bits of all rows of the TDRA table as the quantity of HARQ-ACK feedback bits of each DCI,

$$O_{DCI}^{HARQ} = \max (O_{DCI(0)}^{HARQ}, O_{DCI(1)}^{HARQ}, ... , O_{DCI(C-1)}^{HARQ}).$$

Table 1 configured in step D1 is still taken as an example:

$O_{DCI\ (r=0)}^{HARQ} = 3$, row index = 0, PDSCHs on Cell-1 and Cell-2 are scheduled;

$O_{DCI\ (r=1)}^{HARQ} = 4$, row index = 1, PDSCHs on Cell-2, Cell-3, and Cell-4 are scheduled;

$O_{DCI\ (r=2)}^{HARQ} = 4$, row index = 2, PDSCHs on Cell-2 and Cell-4 are scheduled.

Then, the maximum value of the HARQ-ACK feedback bits of all rows of the TDRA table is $O_{DCI~(r=2)}^{HARQ}=4$, that is, the quantity of HARQ-ACK feedback bits for each DCI is 4; compared with the specific application condition 3, the feedback quantity is saved, and the feedback efficiency is improved.

It should be noted that, when the base station configures the configuration information of the multi-cell scheduling information on the plurality of cells, the terminal needs to calculate the M values corresponding to different cells, and then the maximum value of the M values corresponding to the plurality of cells is taken as the quantity of bits of the HARQ-ACK that is fed back in case of one DCI. For example, if the base station configures the information of step 1 on all of cell-1, cell-2 and cell-3, it is assumed that the calculated values are: M(1) = 6 of cell-1, M(2) of cell-2 = 8, and M(3) of cell-3 = 5, then the quantity of bits of the HARQ-ACK feedback in case of one DCI is 8.

Optionally, when a plurality of BWPs are configured on one cell, the terminal determines, according to a TDRA table and $N_{\text{TB,max}}^{\text{DL}}$ configured corresponding to the activated BWP, as a TDRA table and $N_{\text{TB,max}}^{\text{DL}}$ used by a cell, or determines, according to all configured TDRA tables and $N_{\text{TB,max}}^{\text{DL}}$ of a plurality of BWPs, the maximum of the TDRA tables and $N_{\text{TB,max}}^{\text{DL}}$ of a plurality of BWPs as the TDRA table and $N_{\text{TB,max}}^{\text{DL}}$ used by a cell.

Determining, according to all configured TDRA tables and $N_{\text{TB,max}}^{\text{DL}}$ of a plurality of BWPs, the maximum of the TDRA tables and $N_{\text{TB,max}}^{\text{DL}}$ of a plurality of BWPs as the TDRA table and $N_{\text{TB,max}}^{\text{DL}}$ used by a cell may be shown in Table 4.

Configuring different $N_{\text{TB,max}}^{\text{DL}}$ for different BWP is illustrated below by way of example, as shown in Table 4 below.

Table 4,

| $N_{TB,max}^{DL}$ in case that a scheduling cell includes a plurality of BWP configurations | | | | |
|---|---|---|---|---|
| Scheduling information of multiple cells | BWP=00 $N_{TB,max}^{DL}$ | BWP=01 $N_{TB,max}^{DL}$ | BWP=10 $N_{TB,max}^{DL}$ | BWP=11 $N_{TB,max}^{DL}$ |
| cell-ID =1 | 2 | 1 | 2 | 2 |
| **cell-ID** =2 | 1 | 1 | 2 | 1 |
| **cell-ID** =3 | 2 | 1 | 2 | 2 |
| cell-ID =4 | 1 | 1 | 1 | 1 |
| Total (bit quantity) | 6 | 4 | 7 | 6 |

As shown in Table 4, for the same cell, values of $N_{TB,max}^{DL}$ for different BWP ID configurations are different. In the indication of scheduling signaling from the base station, the BWP ID may indicate any one of the BWP ID = 00/01/10/11. For any multi-cell scheduling signaling, in order to enable the base station and the terminal to have the same HARQ-ACK feedback bit number, the "BWP ID indication" with the maximum total number of bits of the HARQ-ACK feedback is taken, such as the 7 bits in the above table:

when the piece of scheduling signaling indicates that the BWP = 00, the quantity of the HARQ-ACK feedback bits for scheduling the PDSCH by one DCI is 6;
when the piece of scheduling signaling indicates that the BWP = 01, the quantity of the HARQ-ACK feedback bits for scheduling the PDSCH by one DCI is 4;

when the piece of scheduling signaling indicates that the BWP = 00, the quantity of the HARQ-ACK feedback bits for scheduling the PDSCH by one DCI is 6;

when the piece of scheduling signaling indicates that the BWP = 10, the quantity of the HARQ-ACK feedback bits for scheduling the PDSCH by one DCI is 7;

when the piece of scheduling signaling indicates that the BWP = 11, the quantity of the HARQ-ACK feedback bits for scheduling the PDSCH by one DCI is 6.

In this embodiment of the present disclosure, a new problem that occurs in the feature of scheduling PDSCHs on multiple cells by one DCI is solved, so that multi-cell scheduling can work effectively, scheduling flexibility is improved, and in addition, the quantity of HARQ-ACK feedback bits by one DCI is determined according to the maximum possible feedback bit number in actual scheduling, thereby improving feedback efficiency.

The technical solutions provided in the embodiments of the present disclosure may be applicable to various systems, especially 5G systems. For example, the applicable system may be a global system of mobile communication (GSM) system, a code division multiple access (CDMA) system, a wideband code division multiple access (WCDMA) general packet radio service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), A Worldwide Interoperability for Microwave Access (Worldwide Interoperability for Microwave Access) system, a 5G New Radio (NR) system, and the like. The plurality of systems each include a terminal device and a network device. The system may further include a core network part, for example, an Evolved Packet System (EPS), a 5G system (5 GS), and the like.

The terminal device in the embodiments of the present disclosure may be a device that provides voice and/or data connectivity to a user, a handheld device having a wireless connection function, or another processing device connected to a wireless modem. In different systems, the name of the terminal device may be different, for example, in a 5G system, the terminal device may be referred to as user equipment (UE). The wireless terminal device may communicate with one or more core networks (CN) via a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, which exchanges language and/or data with a radio access network. For example, devices such as a Personal Communication Service (PCS) phone, a cordless phone, a Session Initiated Protocol (SIP) phone, a Wireless Local Loop (WLL) station, and a personal digital assistant (PDA). The wireless terminal device may also be referred to as a system, a subscriber unit, a subscriber station, a mobile station, a mobile station, a remote station, an access point, a remote terminal, an access terminal, a user terminal, a user agent, and a user device, which are not limited in the embodiments of the present disclosure.

The network device in this embodiment of the present disclosure may be a base station, and the base station may include a plurality of cells that provide a service for the terminal. Depending on the specific application scenario, the base station may also be referred to as an access point, or may be a device in the access network that communicates with the wireless terminal device through one or more sectors on the air interface, or another name. The network device may be configured to replace the received over-the-air frame with an Internet Protocol (IP) packet as a router between the wireless terminal device and the rest of the access network, wherein the rest of the access network may include an Internet Protocol (IP) communication network. The network device may also coordinate attribute management of the air interface. For example, the network device in the embodiments of the present disclosure may be a Base Transceiver Station (BTS) in a Global System for Mobile Communications (GSM) or a Code Division Multiple Access (Code Division Multiple Access, CDMA), or may be a network device in a Wide-Band Code Division Multiple Access (WCDMA), The embodiment of the present disclosure is not limited in the embodiments of the present disclosure, but may also be an evolved network device in a Long Term Evolution (LTE) system, a 5G base station in a 5G Network Architecture (Next Generation System), a Home Evolved Node B, a Relay Node, a Femto, a Pico Base Station (Pico), etc. which is not limited in the embodiments of the present disclosure. In some network structures, the network device may include a centralized unit (CU) node and a distributed unit (DU) node, and the centralized unit and the distribution unit may also be geographically separated.

The network device and the terminal device may each perform multi-input multi-output (MIMO) transmission by using one or more antennas, and the MIMO transmission may be single user MIMO (SU-MIMO) or multi-user MIMO (multiple user MIMO, MU-MIMO). The MIMO transmission may be a two-dimensional MIMO antenna (2D-MIMO), a three-dimensional MIMO antenna (3D-MIMO), a full dimension MIMO antenna (full dimension, FD-MIMO) or a super-large-scale MIMO antenna (Massive-MIMO), or may be diversity transmission or precoding transmission or beamforming transmission, according to the form and quantity of the root antenna combination.

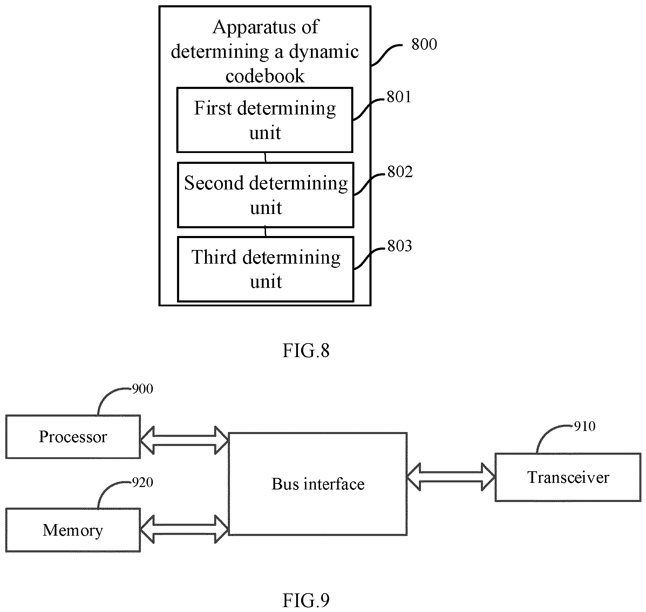

As shown in FIG. 8, an embodiment of the present disclosure provides an apparatus 800 of determining a dynamic codebook, applied to a terminal device or a network device, the apparatus includes:

a first determining unit 801, configured to determine the quantity of pieces of scheduling signaling corresponding to a hybrid automatic repeat request acknowledgement (HARQ-ACK) feedback transmitted on a first physical uplink control channel (PUCCH), wherein at least one piece of scheduling signaling in the pieces of scheduling signaling is configured to schedule physical downlink shared channels (PDSCH) of at least two cells;
a second determining unit 802, configured to determine a quantity of bits of a HARQ-ACK corresponding to each piece of scheduling signaling; and
a third determining unit 803, configured to determine the dynamic codebook transmitted on the first PUCCH based on the quantity of the pieces of scheduling signaling and the quantity of bits of the HARQ-ACK corresponding to each piece of scheduling signaling.

Optionally, the first determining unit 801 is configured to:

determine a target cell on which a transmitted counter downlink assignment index (C-DAI) counts, wherein the target cell is one of cells scheduled by the piece of scheduling signaling, or a cell that transmits the piece of scheduling signaling;
determine a counting order of the C-DAI according to the target cell on which the C-DAI counts;
determine the quantity of pieces of scheduling signaling corresponding to the HARQ-ACK feedback transmitted on the first PUCCH according to the counting order of the C-DAI.

Optionally, one of the cells scheduled by the pieces of scheduling signaling comprises one of the following: a cell with a smallest cell index on the cells scheduled by the pieces of scheduling signaling; a cell with a largest cell index on the cells scheduled by the pieces of scheduling signaling; a cell in which reception time of a scheduled PDSCH is latest on the cells scheduled by the pieces of scheduling signaling.

Optionally, determining the counting order of the C-DAI according to the target cell on which the C-DAI counts includes one or more of the following:

in a case that the target cell is a cell that transmits the piece of scheduling signaling, there are two pieces of scheduling signaling in a same physical downlink control channel (PDCCH) transmission occasion, and in a case that at least one piece of scheduling signaling in the two pieces of scheduling signaling schedules PDSCHs of at least two cells, determining the counting order of the C-DAI according to time of scheduling the PDSCHs of multiple cells;
determining the counting order of the C-DAI according to the index of the target cell on which the C-DAI counts;
determining the counting order of the C-DAI according to a transmission occasion of the pieces of scheduling signaling.

Optionally, determining the counting order of the C-DAI according to the time of scheduling the PDSCHs of the multiple cells includes:
selecting, according to an order of scheduling the PDSCHs by the piece of scheduling signaling, N-th PDSCHs respectively scheduled by the two pieces of scheduling signaling; if target time of the Nth PDSCHs scheduled by the two pieces of scheduling signaling is different, arranging the C-DAI corresponding to the PDSCH with earlier target time at an earlier position; wherein N is an integer greater than or equal to 1, and the target time includes a start time or an end time.

Optionally, determining the counting order of the C-DAI according to the time of scheduling the PDSCHs of the multiple cells includes: selecting, according to an order of scheduling the PDSCHs by the piece of scheduling signaling, Nth PDSCHs respectively scheduled by the two pieces of scheduling signaling; if target time of the Nth PDSCHs scheduled by the two pieces of scheduling signaling is same, selecting (N+1)th PDSCHs respectively scheduled by the two pieces of scheduling signaling, and when the target time of the (N +1)th PDSCHs scheduled by the two pieces of scheduling signaling is different, arranging the C-DAI corresponding to the PDSCH with earlier target time at an earlier position; or if the target time of the Nth PDSCHs scheduled by the two pieces of scheduling signaling is same, determining a counting order of the C-DAIs corresponding to the two pieces of scheduling signaling according to the target cells on which the C-DAIs count; wherein N is an integer greater than or equal to 1, and the target time includes a start time or an end time.

Optionally, the second determining unit 802 is configured to: obtain a maximum quantity of schedulable cells corresponding to one piece of scheduling signaling; determine the quantity of bits of the HARQ-ACK corresponding to the piece of scheduling signaling according to the maximum quantity of the schedulable cells and a quantity of bits of feedback on each schedulable cell.

Optionally, obtaining the maximum quantity of the schedulable cells corresponding to one piece of scheduling signaling includes: determining the maximum quantity, configured by higher layer signaling, of the schedulable cells corresponding to one piece of scheduling signaling; or determining the maximum quantity of the schedulable cells corresponding to one piece of scheduling signaling according to a configured first target time domain resource allocation TDRA table.

Optionally, the second determining unit 802 is configured to: obtain a second target TDRA table; determine a schedulable cell in each row in the second target TDRA table; determine the quantity of bits of the HARQ-ACK corresponding to one piece of scheduling signaling according to the quantity of schedulable cells in each row and the quantity of bits of feedback on each cell.

Optionally, determining the quantity of bits of the HARQ-ACK corresponding to one piece of scheduling signaling includes: determining the quantity of bits of the HARQ-ACK corresponding to each row according to the quantity of schedulable cells in each row and the quantity of bits of feedback on each cell; selecting, according to the quantity of bits of the HARQ-ACK corresponding to each row, a maximum quantity of bits of the HARQ-ACK as the quantity of bits of the HARQ-ACK corresponding to one piece of scheduling signaling..

It should be noted that the apparatus embodiment is an apparatus corresponding to the foregoing method embodiment, and all implementations in the foregoing method embodiments are applicable to the apparatus embodiment, and can also achieve the same technical effect.

It should be noted that the division of the units in the embodiments of the present disclosure is schematic, and is merely a logical function division, and there may be another division manner in actual implementation. In addition, functional units in the embodiments of the present disclosure may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on such understanding, the technical solutions of the present disclosure essentially or all or part of the technical solution may be embodied in the form of a software product, and the computer software product is stored in a storage medium, and includes several instructions for causing a computer device (which may be a personal computer, a server, or a network device) or a processor to perform all or part of the steps of the methods described in the embodiments of the present disclosure. The foregoing storage medium includes any medium that can store program code, such as a USB flash drive, a removable hard disk, a read-only memory (ROM), a random access memory (RAM), a magnetic disk, or an optical disk.

As shown in FIG. 9, an embodiment of the present disclosure further provides a communication device, wherein the communication device is a terminal device or a network device, and includes a processor 900, a transceiver 910, a memory 920, and a program stored on the memory 920 and executable on the processor 900, wherein the transceiver 910 is connected to the processor 900 and the memory 920 through a bus interface, and the processor 900 is configured to read a program in the memory to perform the following processes:

determining a quantity of pieces of scheduling signaling corresponding to a hybrid automatic repeat request acknowledgement (HARQ-ACK) feedback transmitted on a first physical uplink control channel (PUCCH), wherein at least one piece of scheduling signaling in the pieces of scheduling signaling is configured to schedule physical downlink shared channels (PDSCH) of at least two cells;

determining a quantity of bits of a HARQ-ACK corresponding to each piece of scheduling signaling;

determining the dynamic codebook transmitted on the first PUCCH based on the quantity of the pieces of scheduling signaling and the quantity of bits of the HARQ-ACK corresponding to each piece of scheduling signaling.

The transceiver 910 is configured to receive and send data under the control of the processor 900.

In FIG. 9, the bus architecture may include any number of interconnected buses and bridges, and specifically, various circuits of one or more processors represented by the processor 900 and a memory represented by the memory 920 are linked together. The bus architecture may also link various other circuits, such as a peripheral device, a voltage regulator, and a power management circuit, which are well known in the art, and therefore are not further described herein. The bus interface provides an interface. The transceiver 910 may be a plurality of elements, that is, includes a transmitter and a receiver, and provides units for communicating with various other apparatuses on a transmission medium, wherein the transmission mediums include transmission media such as a wireless channel, a wired channel, and an optical cable. For different user equipment, the user interface may further be an interface capable of being externally connected to an internal connection requirement device, and the connected device includes but is not limited to a keypad, a display, a speaker, a microphone, a joystick, and the like.

The processor 900 is responsible for managing the bus architecture and general processing, and the memory 920 may store data used by the processor 900 when performing operations.

Optionally, the processor 900 may be a CPU (Central Processing Unit), an Application Specific Integrated Circuit (ASIC), a Field-Programmable Gate Array (FPGA), or a Complex Programmable Logic Device (CPLD), and the processor may also adopt a multi-core architecture.

The processor is configured to invoke the computer program stored in the memory, to perform any one of the methods provided in the embodiments of the present disclosure according to the obtained executable instruction. The processor and the memory may also be physically separated.

Optionally, the processor is configured to read a computer program in the memory and perform the following operations:

determining a target cell on which a transmitted counter downlink assignment index (C-DAI) counts, wherein the target cell is one of cells scheduled by the pieces of scheduling signaling, or a cell that transmits the pieces of scheduling signaling; determining a counting order of the C-DAI according to the target cell on which the C-DAI counts; determining the quantity of pieces of scheduling signaling corresponding to the HARQ-ACK feedback transmitted on the first PUCCH according to the counting order of the C-DAI.

Optionally, one of the cells scheduled by the piece of scheduling signaling includes one of the following:

a cell with a smallest cell index on the cells scheduled by the pieces of scheduling signaling;
a cell with a largest cell index on the cells scheduled by the pieces of scheduling signaling;
a cell on which reception time of a scheduled PDSCH is latest on the cells scheduled by the pieces of scheduling signaling.

Optionally, the processor is configured to read a computer program in the memory and perform one or more of the following operations:

in a case that the target cell is a cell that transmits the pieces of scheduling signaling, there are two pieces of scheduling signaling in a same physical downlink control channel (PDCCH) transmission occasion, and in a case that at least one piece of scheduling signaling in the two pieces of scheduling signaling schedules PDSCHs of at least two cells, determining the counting order of the C-DAI according to time of scheduling the PDSCHs of multiple cells;
determining the counting order of the C-DAI according to the index of the target cell on which the C-DAI counts;
determining the counting order of the C-DAI according to a transmission occasion of the pieces of scheduling signaling.

Optionally, the processor is configured to read a computer program in the memory and perform the following operations:
selecting, according to an order of scheduling the PDSCHs by the pieces of scheduling signaling, N-th PDSCHs respectively scheduled by the two pieces of scheduling signaling; if target time of the Nth PDSCHs scheduled by the two pieces of scheduling signaling is different, arranging the C-DAI corresponding to the PDSCH with earlier target time at an earlier position; wherein N is an integer greater than or equal to 1, and the target time includes a start time or an end time.

Optionally, the processor is configured to read the computer program in the memory to further perform the following operations:
selecting, according to an order of scheduling the PDSCHs by the pieces of scheduling signaling, Nth PDSCHs respectively scheduled by the two pieces of scheduling signaling; if target time of the Nth PDSCHs scheduled by the two pieces of scheduling signaling is same, selecting (N+1)th PDSCHs respectively scheduled by the two pieces of scheduling signaling, and when the target time of the (N +1)th PDSCHs scheduled by the two pieces of scheduling signaling is different, arranging the C-DAI corresponding to the PDSCH with earlier target time at an earlier position; or if the target time of the Nth PDSCHs scheduled by the two pieces of scheduling signaling is same, determining a counting order of the C-DAIs corresponding to the two pieces of scheduling signaling according to the target cells on which the C-DAIs count; wherein N is an integer greater than or equal to 1, and the target time includes a start time or an end time.

Optionally, the processor is configured to read a computer program in the memory and perform the following operations:
obtaining a maximum quantity of schedulable cells corresponding to one piece of scheduling signaling; determining the quantity of bits of the HARQ-ACK corresponding to the piece of scheduling signaling according to the maximum quantity of the schedulable cells and a quantity of bits of feedback on each schedulable cell.

Optionally, the processor is configured to read a computer program in the memory and perform the following operations:
determining the maximum quantity, configured by higher layer signaling, of the schedulable cells corresponding to one piece of scheduling signaling; or determining the maximum quantity of the schedulable cells corresponding to one piece of scheduling signaling according to a configured first target time domain resource allocation TDRA table.

Optionally, the processor is configured to read a computer program in the memory and perform the following operations:

obtaining a second target TDRA table;
determining a schedulable cell in each row in the second target TDRA table;
determining the quantity of bits of the HARQ-ACK corresponding to one piece of scheduling signaling according to the quantity of schedulable cells in each row and the quantity of bits of feedback on each cell.

Optionally, the processor is configured to read a computer program in the memory and perform the following operations:

determining the quantity of bits of the HARQ-ACK corresponding to each row according to the quantity of schedulable cells in each row and the quantity of bits of feedback on each cell; selecting, according to the quantity of bits of the HARQ-ACK corresponding to each row, a maximum quantity of bits of the HARQ-ACK as the quantity of bits of the HARQ-ACK corresponding to one piece of scheduling signaling.

At least one embodiment of the present disclosure further provides a communication device, wherein the communication device is a terminal device or a network device, and includes a memory, a processor, and a computer program stored in the memory and executable on the processor, and when the processor executes the program, each process in the method embodiment of determining a dynamic codebook is implemented, and the same technical effect can be achieved, which is not described herein again in order to avoid repetition.

At least one embodiment of the present disclosure further provides a computer-readable storage medium having stored thereon a computer program that, when executed by a processor, implements various processes in the method embodiments for determining a dynamic codebook as described above, and can achieve the same technical effect. The computer-readable storage medium is, for example, a Read-Only Memory (ROM), a Random Access Memory (RAM), a magnetic disk, or an optical disk.

It should be noted that it should be understood that the division of the foregoing modules is merely a division of logical functions, and may be completely or partially integrated into one physical entity during actual implementation, or may be physically separated. The modules may all be implemented in a form of software invoked by a processing element, or may all be implemented in a form of hardware; or some modules may be implemented in a form of invoking software by using a processing element, and some modules are implemented in a form of hardware. For example, the determining module may be a separately established processing element, or may be integrated in a chip of the foregoing apparatus, or may be stored in a memory of the apparatus in a form of program code, and a certain processing element of the apparatus invokes and executes the functions of the foregoing determining module. Implementation of other modules is similar. In addition, all or part of these modules may be integrated together, or may be implemented independently. The processing element described herein may be an integrated circuit having a signal processing capability. In an implementation process, steps of the foregoing method or the foregoing modules may be completed by using an integrated logic circuit of hardware in the processor element or an instruction in a form of software.

For example, each module, unit, subunit, or sub-module may be one or more integrated circuits configured to implement the above method, for example, one or more Application Specific Integrated Circuit (ASIC), or one or more microprocessors (DSP), or one or more field programmable gate arrays (FPGA). For another example, when the foregoing module is implemented in a form of scheduling program code by using a processing element, the processing element may be a general-purpose processor, for example, a central processing unit (Central Processing Unit, CPU), or another processor that can invoke the program code. For another example, these modules may be integrated together and implemented in a form of a system-on-a-chip (SOC).

In the specification and claims of the present disclosure, the terms "first", "second", and the like are intended to distinguish between similar objects, and are not necessarily used to describe a specific order or sequence. It should be understood that the data used in this way can be interchanged under appropriate circumstances, so that the embodiments of the present disclosure described herein, for example, are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices. In addition, the specification and claims use "and/or" to refer to at least one of the connected objects, such as A and/or B and/or C, representing the presence of A, B alone, C alone, and both A and B, both B and C exist, both A and C exist, and A, B and C both exist. Similarly, use of "at least one of A and B" in this specification and claims should be understood as "A alone, B alone, or both A and B".

A person skilled in the art should understand that the embodiments of the present disclosure may be provided as a method, a system, or a computer program product. Therefore, the present disclosure may take the form of an entirely hardware embodiment, an entirely software embodiment, or an embodiment combining software and hardware aspects. Moreover, the present disclosure may use a form of a computer program product implemented on one or more computer-usable storage media (including but not limited to a disk memory, an optical memory, and the like) including computer-usable program codes.

The present disclosure is described with reference to the flowcharts and/or block diagrams of the method, the device (system), and the computer program product according to the embodiments of the present disclosure. It should be understood that each process and/or block in the flowcharts and/or block diagrams and a combination of processes and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing devices generate means for implementing the functions specified in one or more flows of the flowcharts and/or one or more blocks in the block diagrams.

These processor-executable instructions may also be stored in a processor-readable memory that can direct a computer or other programmable data processing device to function in a particular manner, such that the instructions stored in the processor-readable memory produce an article of manufacture including an instruction device that implements the functions specified in one or more flows of the flowchart and/or one or more blocks of the block diagram.

These processor-executable instructions may also be loaded onto a computer or other programmable data processing device such that a series of operational steps are performed on the computer or other programmable device to produce a computer-implemented process, such that the instructions executed on the computer or other programmable device provide steps for implementing the functions specified in one or more flows of the flowchart and/or one or more blocks of the block diagram.

Evidently those skilled in the art can make various modifications and variations to the disclosure without departing from the spirit and scope of the disclosure. In this way, if these modifications and variations of the present disclosure fall within the scope of the claims of the present disclosure and their equivalent technologies, the present disclosure is also intended to include these modifications and variations.

## Claims

1. A method of determining a dynamic hybrid automatic repeat request acknowledgement (HARQ-ACK) codebook, performed by a communication device, the method comprising:

   determining a quantity of pieces of scheduling signaling corresponding to a HARQ-ACK feedback transmitted on a first physical uplink control channel (PUCCH), wherein at least one piece of scheduling signaling in the pieces of scheduling signaling is used to schedule physical downlink shared channels (PDSCH) on at least two cells;
   determining a quantity of bits of a HARQ-ACK corresponding to each piece of the scheduling signaling;
   determining the dynamic HARQ-ACK codebook transmitted on the first PUCCH based on the quantity of the pieces of the scheduling signaling and the quantity of bits of the HARQ-ACK corresponding to each piece of the scheduling signaling.

2. The method according to claim 1, wherein determining the quantity of pieces of the scheduling signaling corresponding to the HARQ-ACK feedback transmitted on the first PUCCH comprises:

   determining a target cell on which a transmitted counter downlink assignment index (C-DAI) counts, wherein the target cell is one of cells scheduled by the piece of the scheduling signaling, or a cell that transmits the piece of the scheduling signaling;
   determining a counting order of the C-DAI according to the target cell on which the C-DAI counts;
   determining the quantity of pieces of the scheduling signaling corresponding to the HARQ-ACK feedback transmitted on the first PUCCH according to the counting order of the C-DAI.

3. The method according to claim 2, wherein one of the cells scheduled by the piece of the scheduling signaling comprises one of the following:

   a cell with a smallest cell index on the cells scheduled by the piece of the scheduling signaling;
   a cell with a largest cell index on the cells scheduled by the piece of the scheduling signaling; or
   a cell on which reception time of a scheduled PDSCH is latest on the cells scheduled by the piece of the scheduling signaling.

4. The method according to claim 2, wherein determining the counting order of the C-DAI according to the target cell on which the C-DAI counts comprises one or more of the following:

   in a case that the target cell is a cell that transmits the piece of the scheduling signaling, there are two pieces of the scheduling signaling in a same physical downlink control channel (PDCCH) transmission occasion, and in a case that at least one piece of the scheduling signaling in the two pieces of the scheduling signaling schedules PDSCHs on at least two cells, determining the counting order of the C-DAI according to time of scheduling the PDSCHs of multiple cells;
   determining the counting order of the C-DAI according to the index of the target cell on which the C-DAI counts;

determining the counting order of the C-DAI according to a transmission occasion of the piece of the scheduling signaling.

5. The method according to claim 4, wherein determining the counting order of the C-DAI according to the time of scheduling the PDSCHs of the multiple cells comprises:

selecting, according to an order of scheduling the PDSCHs by the piece of the scheduling signaling, N-th PDSCHs respectively scheduled by the two pieces of the scheduling signaling;
if target time of the Nth PDSCHs scheduled by the two pieces of the scheduling signaling is different, arranging the C-DAI corresponding to the PDSCH with earlier target time at an earlier position;
wherein N is an integer greater than or equal to 1, and the target time comprises a start time or an end time.

6. The method according to claim 4, wherein determining the counting order of the C-DAI according to the time of scheduling the PDSCHs of the multiple cells comprises:

selecting, according to an order of scheduling the PDSCHs by the piece of the scheduling signaling, Nth PDSCHs respectively scheduled by the two pieces of the scheduling signaling;
if target time of the Nth PDSCHs scheduled by the two pieces of the scheduling signaling is same, selecting (N+1) th PDSCHs respectively scheduled by the two pieces of the scheduling signaling, and when the target time of the (N +1)th PDSCHs scheduled by the two pieces of the scheduling signaling is different, arranging the C-DAI corresponding to the PDSCH with earlier target time at an earlier position; or
if the target time of the Nth PDSCHs scheduled by the two pieces of the scheduling signaling is same, determining a counting order of the C-DAIs corresponding to the two pieces of the scheduling signaling according to the target cells on which the C-DAIs count;
wherein N is an integer greater than or equal to 1, and the target time comprises a start time or an end time.

7. The method according to claim 1, wherein determining the quantity of bits of the HARQ-ACK corresponding to each piece of the scheduling signaling comprises:

obtaining a maximum quantity of schedulable cells corresponding to one piece of the scheduling signaling;
determining the quantity of bits of the HARQ-ACK corresponding to the piece of the scheduling signaling according to the maximum quantity of the schedulable cells and a quantity of bits of feedback on each schedulable cell.

8. The method according to claim 7, wherein obtaining the maximum quantity of the schedulable cells corresponding to one piece of the scheduling signaling comprises:

determining the maximum quantity, configured by higher layer signaling, of the schedulable cells corresponding to one piece of the scheduling signaling; or
determining the maximum quantity of the schedulable cells corresponding to one piece of the scheduling signaling according to a configured first target time domain resource allocation TDRA table.

9. The method according to claim 7, wherein determining the quantity of bits of the HARQ-ACK corresponding to the piece of the scheduling signaling according to the maximum quantity of the schedulable cells and the quantity of bits of feedback on each schedulable cell comprises:
when determining the maximum quantity of the schedulable cells and the quantity of bits corresponding to each pre-configured cell, adding quantities of bits respectively corresponding to schedulable cells to obtain the quantity of bits of the HARQ-ACK corresponding to the piece of the scheduling signaling.

10. The method according to claim 1, wherein determining the quantity of bits of the HARQ-ACK corresponding to each piece of the scheduling signaling comprises:

obtaining a second target TDRA table;
determining a schedulable cell in each row in the second target TDRA table;
determining the quantity of bits of the HARQ-ACK corresponding to one piece of the scheduling signaling according to the quantity of schedulable cells in each row and the quantity of bits of feedback on each cell.

11. The method according to claim 10, wherein determining the quantity of bits of the HARQ-ACK corresponding to one piece of the scheduling signaling comprises:

determining the quantity of bits of the HARQ-ACK corresponding to each row according to the quantity of schedulable cells in each row and the quantity of bits of feedback on each cell;

selecting, according to the quantity of bits of the HARQ-ACK corresponding to each row, a maximum quantity of bits of the HARQ-ACK as the quantity of bits of the HARQ-ACK corresponding to one piece of the scheduling signaling.

12. A communications device, wherein the communications device is a terminal device or a network device, the communication device comprises a memory, a transceiver, and a processor:
the memory is configured to store a computer program; the transceiver, configured to send and receive data under the control of the processor; and the processor is configured to read the computer program in the memory and perform the following operations:

determining a quantity of pieces of the scheduling signaling corresponding to a hybrid automatic repeat request acknowledgement (HARQ-ACK) feedback transmitted on a first physical uplink control channel (PUCCH), wherein at least one of the pieces of the scheduling signaling is used to schedule physical downlink shared channels (PDSCH) on at least two cells;

determining a quantity of bits of a HARQ-ACK corresponding to each piece of the scheduling signaling;

determining a dynamic HARQ-ACK codebook transmitted on the first PUCCH based on the quantity of the pieces of the scheduling signaling and the quantity of bits of the HARQ-ACK corresponding to each piece of the scheduling signaling.

13. The communication device according to claim 12, wherein the processor is configured to read the computer program in the memory and perform the following operations:

determining a target cell on which a transmitted counter downlink assignment index (C-DAI) counts, wherein the target cell is one of cells scheduled by the piece of the scheduling signaling, or a cell that transmits the piece of the scheduling signaling;

determining a counting order of the C-DAI according to the target cell on which the C-DAI counts;

determining the quantity of pieces of the scheduling signaling corresponding to the HARQ-ACK feedback transmitted on the first PUCCH according to the counting order of the C-DAI.

14. The communication device according to claim 13, wherein one of the cells scheduled by the piece of the scheduling signaling comprises one of the following:

a cell with a smallest cell index on the cells scheduled by the piece of the scheduling signaling;

a cell with a largest cell index on the cells scheduled by the piece of the scheduling signaling; or

a cell on which reception time of a scheduled PDSCH is latest on the cells scheduled by the piece of the scheduling signaling.

15. The communication device according to claim 13, wherein the processor is configured to read the computer program in the memory and perform one or more of the following operations:

in a case that the target cell is a cell that transmits the piece of the scheduling signaling, there are two pieces of the scheduling signaling in a same physical downlink control channel (PDCCH) transmission occasion, and in a case that at least one piece of the scheduling signaling in the two pieces of the scheduling signaling schedules PDSCHs on at least two cells, determining the counting order of the C-DAI according to time of scheduling the PDSCHs of multiple cells;

determining the counting order of the C-DAI according to the index of the target cell on which the C-DAI counts;

determining the counting order of the C-DAI according to a transmission occasion of the piece of the scheduling signaling.

16. The communication device according to claim 15, wherein the processor is configured to read a computer program in the memory and perform the following operations:

selecting, according to an order of scheduling the PDSCHs by the piece of the scheduling signaling, N-th PDSCHs respectively scheduled by the two pieces of the scheduling signaling;

if target time of the Nth PDSCHs scheduled by the two pieces of the scheduling signaling is different, arranging the C-DAI corresponding to the PDSCH with earlier target time at an earlier position;
wherein N is an integer greater than or equal to 1, and the target time comprises a start time or an end time.

17. The communication device according to claim 15, wherein the processor is configured to read the computer program in the memory to further perform the following operations:

selecting, according to an order of scheduling the PDSCHs by the piece of the scheduling signaling, Nth PDSCHs respectively scheduled by the two pieces of the scheduling signaling;
if target time of the Nth PDSCHs scheduled by the two pieces of the scheduling signaling is same, selecting (N+1) th PDSCHs respectively scheduled by the two pieces of the scheduling signaling, and when the target time of the (N +1)th PDSCHs scheduled by the two pieces of the scheduling signaling is different, arranging the C-DAI corresponding to the PDSCH with earlier target time at an earlier position; or
if the target time of the Nth PDSCHs scheduled by the two pieces of the scheduling signaling is same, determining a counting order of the C-DAIs corresponding to the two pieces of the scheduling signaling according to the target cells on which the C-DAIs count;
wherein N is an integer greater than or equal to 1, and the target time comprises a start time or an end time.

18. The communication device according to claim 12, wherein the processor is configured to read the computer program in the memory and perform the following operations:

obtaining a maximum quantity of schedulable cells corresponding to one piece of the scheduling signaling;
determining the quantity of bits of the HARQ-ACK corresponding to the piece of the scheduling signaling according to the maximum quantity of the schedulable cells and a quantity of bits of feedback on each schedulable cell.

19. The communication device according to claim 18, wherein the processor is configured to read the computer program in the memory and perform the following operations:

determining the maximum quantity, configured by higher layer signaling, of the schedulable cells corresponding to one piece of the scheduling signaling; or
determining the maximum quantity of the schedulable cells corresponding to one piece of the scheduling signaling according to a configured first target time domain resource allocation TDRA table.

20. The communication device according to claim 18, wherein the processor is configured to read the computer program in the memory and perform the following operations:
when determining the maximum quantity of the schedulable cells and the quantity of bits corresponding to each pre-configured cell, adding quantities of bits respectively corresponding to schedulable cells to obtain the quantity of bits of the HARQ-ACK corresponding to the piece of the scheduling signaling.

21. The communication device according to claim 12, wherein the processor is configured to read the computer program in the memory and perform the following operations:

obtaining a second target TDRA table;
determining a schedulable cell in each row in the second target TDRA table;
determining the quantity of bits of the HARQ-ACK corresponding to one piece of the scheduling signaling according to the quantity of schedulable cells in each row and the quantity of bits of feedback on each cell.

22. The communication device according to claim 21, wherein the processor is configured to read the computer program in the memory and perform the following operations:

determining the quantity of bits of the HARQ-ACK corresponding to each row according to the quantity of schedulable cells in each row and the quantity of bits of feedback on each cell;
selecting, according to the quantity of bits of the HARQ-ACK corresponding to each row, a maximum quantity of bits of the HARQ-ACK as the quantity of bits of the HARQ-ACK corresponding to one piece of the scheduling signaling.

23. An apparatus of determining a dynamic hybrid automatic repeat request acknowledgement (HARQ-ACK) codebook, applied to a terminal device or a network device, the apparatus comprising:

> a first determining unit, configured to determine a quantity of pieces of scheduling signaling corresponding to a HARQ-ACK feedback transmitted on a first physical uplink control channel (PUCCH), wherein at least one of the pieces of the scheduling signaling is configured to schedule physical downlink shared channels (PDSCH) on at least two cells;
> a second determining unit, configured to determine a quantity of bits of a HARQ-ACK corresponding to each piece of the scheduling signaling;
> a third determining unit, configured to determine the dynamic HARQ-ACK codebook transmitted on the first PUCCH based on the quantity of the pieces of the scheduling signaling and the quantity of bits of the HARQ-ACK corresponding to each piece of the scheduling signaling.

24. A processor-readable storage medium, wherein the processor-readable storage medium stores a computer program, and the computer program is configured to cause a processor to perform the method according to any one of claims 1 to 11.

FIG.1

Indicated PUCCH on same
slot

6-bit HARQ-ACK
feedback

Missed DCI       Missed DCI       User
detection        detection        terminal

FIG.2

DCI        PUCCH

| DCI-1 | DCI-2 | DCI-3 | DCI-4 | DCI-5 | | DCI-7 | | | |
|---|---|---|---|---|---|---|---|---|---|

C-DAI    1      3      4      6      7              8

T-DAI    2      3      5      6      7              9

| DCI-1 | | DCI-2 | | | | DCI-3 | | | |
|---|---|---|---|---|---|---|---|---|---|

C-DAI    2             5                     9
                                            9
T-DAI    2             5

FIG.3

FIG.4

Determining a quantity of scheduling signaling corresponding to a hybrid automatic repeat request acknowledgement (HARQ-ACK) feedback transmitted on a first physical uplink control channel (PUCCH) — S501

Determining a quantity of bits of a HARQ-ACK corresponding to each scheduling signaling — S502

Determining the dynamic codebook transmitted on the first PUCCH based on the quantity of the scheduling signaling and the quantity of bits of the HARQ-ACK corresponding to each scheduling signaling — S503

FIG.5

FIG.6

FIG.7

EP 4 535 699 A1

FIG.8

FIG.9

33

## INTERNATIONAL SEARCH REPORT

| International application No. |
| --- |
| **PCT/CN2023/095724** |

| A. | CLASSIFICATION OF SUBJECT MATTER |
| --- | --- |

H04L1/18(2023.01)i

According to International Patent Classification (IPC) or to both national classification and IPC

| B. | FIELDS SEARCHED |
| --- | --- |

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNTXT, ENTXTC, VEN, 3GPP, IEEE, CNKI: 动态, 码本, 混合自动重传请求应答, 下行控制信息, 下行分配索引, 时域资源分配, 比特, 数, 小区, 载波, 多, 不同, 调度, 排序, 排列, dynamic, codebook, HARQ-ACK, DCI, DAI, TDRA, bit, number, cell?, carrier?, multi, different, schedul+, order+, arrang+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113543348 A (DATANG MOBILE COMMUNICATIONS EQUIPMENT CO., LTD.) 22 October 2021 (2021-10-22) <br> description, paragraphs [0002]-[0240], [0274], and [0353] | 1-6, 12-17, 23-24 |
| Y | CN 113543348 A (DATANG MOBILE COMMUNICATIONS EQUIPMENT CO., LTD.) 22 October 2021 (2021-10-22) <br> description, paragraphs [0002]-[0240], [0274], and [0353] | 7-11, 18-22 |
| Y | CN 113286372 A (VIVO COMMUNICATION TECHNOLOGY CO., LTD.) 20 August 2021 (2021-08-20) <br> description. paragraphs [0103]-[0104] | 7-11, 18-22 |
| A | CN 113543321 A (DATANG MOBILE COMMUNICATIONS EQUIPMENT CO., LTD.) 22 October 2021 (2021-10-22) <br> entire document | 1-24 |
| A | CN 113747588 A (DATANG MOBILE COMMUNICATIONS EQUIPMENT CO., LTD.) 03 December 2021 (2021-12-03) <br> entire document | 1-24 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 July 2023** | **12 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**EP 4 535 699 A1**

| INTERNATIONAL SEARCH REPORT | International application No. |
|---|---|
| | **PCT/CN2023/095724** |

**C.    DOCUMENTS CONSIDERED TO BE RELEVANT**

| Category* | Citation of document, with indication, where appropriate, of the relevant passages | Relevant to claim No. |
|---|---|---|
| A | WO 2021258764 A1 (ZTE CORP.) 30 December 2021 (2021-12-30)<br>entire document | 1-24 |
| A | HUAWEI. et al. "Discussion on Multi-Cell PUSCH/PDSCH Scheduling with a Single Scheduling DCI"<br>*3GPP TSG-RAN WG1 Meeting #109-e R1-2203135*, 29 April 2022 (2022-04-29),<br>entire document | 1-24 |

Form PCT/ISA/210 (second sheet) (July 2022)

35

## INTERNATIONAL SEARCH REPORT
### Information on patent family members

International application No.

**PCT/CN2023/095724**

| Patent document cited in search report | | | Publication date (day/month/year) | Patent family member(s) | | | Publication date (day/month/year) |
|---|---|---|---|---|---|---|---|
| CN | 113543348 | A | 22 October 2021 | WO | 2021208854 | A1 | 21 October 2021 |
| | | | | EP | 4138499 | A1 | 22 February 2023 |
| | | | | KR | 20220166843 | A | 19 December 2022 |
| | | | | IN | 202227060307 | A | 02 December 2022 |
| CN | 113286372 | A | 20 August 2021 | WO | 2021164727 | A1 | 26 August 2021 |
| CN | 113543321 | A | 22 October 2021 | EP | 4138483 | A1 | 22 February 2023 |
| | | | | WO | 2021208905 | A1 | 21 October 2021 |
| CN | 113747588 | A | 03 December 2021 | EP | 4161198 | A1 | 05 April 2023 |
| | | | | WO | 2021238545 | A1 | 02 December 2021 |
| WO | 2021258764 | A1 | 30 December 2021 | CN | 113839753 | A | 24 December 2021 |

Form PCT/ISA/210 (patent family annex) (July 2022)

**REFERENCES CITED IN THE DESCRIPTION**

**Patent documents cited in the description**

- CN 202210594823
- CN 202211664494